(19) Europäisches Patentamt / European Patent Office / Office européen des brevets

(11) **EP 2 881 583 B1**

(12) **EUROPEAN PATENT SPECIFICATION**

(45) Date of publication and mention
of the grant of the patent:
**31.05.2017 Bulletin 2017/22**

(21) Application number: **12882290.5**

(22) Date of filing: **09.08.2012**

(51) Int Cl.:
*F04B 49/06* (2006.01)        *F25B 49/02* (2006.01)
*F04B 41/06* (2006.01)

(86) International application number:
**PCT/CN2012/079883**

(87) International publication number:
**WO 2014/019250 (06.02.2014 Gazette 2014/06)**

(54) **METHOD AND DEVICE FOR OPTIMIZING OPERATIONAL CONTROL OF COMPRESSORS IN MULTI-COUPLE UNIT AIR-CONDITIONING SYSTEM**

VERFAHREN UND VORRICHTUNG ZUR OPTIMIERUNG DER BETRIEBSSTEUERUNG VON KOMPRESSOREN IN EINER KLIMAANLAGE FÜR EINE MULTIKOPPLUNGSEINHEIT

PROCÉDÉ ET DISPOSITIF POUR OPTIMISER LA COMMANDE OPÉRATIONNELLE DE COMPRESSEURS DANS UN SYSTÈME DE CLIMATISATION À UNITÉ À COUPLES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2012 CN 201210274055**

(43) Date of publication of application:
**10.06.2015 Bulletin 2015/24**

(73) Proprietor: **Qingdao Hisense Hitachi Air-Conditioning Systems Co. Ltd.**
**Qingdao, Shandong 266510 (CN)**

(72) Inventors:
• **SHI, Jingfeng**
  **Qingdao**
  **Shandong 266510 (CN)**
• **ZHANG, Wenqiang**
  **Qingdao**
  **Shandong 266510 (CN)**
• **LI, Yajun**
  **Qingdao**
  **Shandong 266510 (CN)**
• **MENG, Jianjun**
  **Qingdao**
  **Shandong 266510 (CN)**
• **MA, Yunchao**
  **Qingdao**
  **Shandong 266510 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2005/100885      WO-A1-2008/009073**
**CN-A- 1 969 155          CN-A- 102 109 207**
**CN-A- 102 460 029       CN-A- 102 536 767**
**US-A1- 2006 080 980     US-A1- 2008 014 097**
**US-B2- 6 883 346**

**Description**

**Field**

The present disclosure relates to the technology of intelligent energy conservation of an air conditioner and particularly to a method and device for optimizing compressor operation control in a multi-connected air conditioner system.

**Background**

Along with a constantly improved level of people's life, air conditioner systems have been installed in living and indoor working environments for more comfort in the living and working environments as a vital option of the people to accommodate a higher demand for comfort. Particularly a multi-connected air conditioner is a significant trend in the development of the air conditioners due to its free control, efficient energy conservation, convenience to install and maintain, and other advantages.

The multi-connected air conditioner system generally includes one or more outdoor machines and one or more indoor machines, and one or more compressors are arranged throughout the outdoor machines; and as compared with multiple home air conditioners, the outdoor machines of the multi-connected air conditioner system can be shared to thereby lower effectively a cost of devices and manage centrally the respective indoor machines and outdoor machines, where a single compressor can be put into operation separately or multiple compressors can be put into operation concurrently for higher flexibility of control. For example, a part or all of the compressors can be started in response to changes in temperature of an outdoor environment, in air conditioner area and in season. By way of an example, a larger number of compressors can be put into operation in the evening, late night and early dawn in winter, whereas some of the operating compressors can be stopped gradually in a period of time from the morning to the afternoon.

As the issues of energy sources and environments have become increasingly prominent, optimization of the multi-connected air conditioner system for lower energy consumption thereof has become a trend in the development of energy conservation in the multi-connected air conditioner system. Methods for optimization of the multi-connected air conditioner system in the prior art are primarily concerned with an output capacity of the multi-connected air conditioner system, that is, whether the output of the system satisfies a pre-designed output demand threshold, that is, one or more of the compressors in the multi-connected air conditioner system is or are selected so that the total output capacity thereof reaches the output demand threshold.

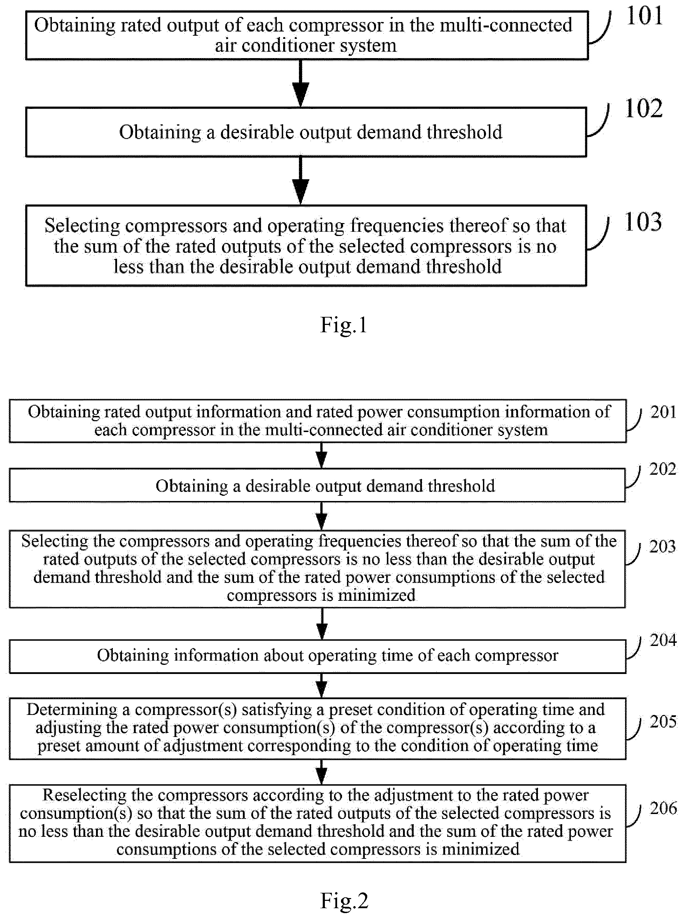

Fig.1 illustrates a schematic flow chart of a method for optimizing compressor operation control in a multi-connected air conditioner system in the prior art. Referring to Fig. 1, the flow includes:

Operation 101: obtaining rated outputs of each compressor in the multi-connected air conditioner system;

In this operation, if there are three compressors, which are compressors A to C respectively, in the multi-connected air conditioner system, then rated output of each compressor can be derived from corresponding technical data provided for the compressors, and in a real application, a rated output parameter of a compressor can be provided together with a rated power consumption corresponding to the rated output of the compressor. In the present application, the rated output and the rated power consumption corresponding thereto are referred collectively to as performance parameters of the compressor in international units.

Table 1 depicts performance parameters of a compressor A.

Table 1

| Rated output | Rated power consumption |
| --- | --- |
| 1 | 0.66666667 |
| 2 | 1.17647059 |
| 3 | 1.57894737 |
| 4 | 2.10526316 |
| 5 | 2.77777778 |
| 6 | 3.75 |
| 7 | 5 |

In Table 1, there are seven levels in total of the output (rated output) of the compressor A, which ranges from 1 to 7, where the rated power consumption becomes higher with a higher level of the output.

Table 2 depicts performance parameters of a compressor B.

Table 2

| Rated output | Rated power consumption |
|:---:|:---:|
| 1 | 0.71428571 |
| 2 | 1.33333333 |
| 3 | 1.76470588 |
| 4 | 2.10526316 |
| 5 | 2.63157895 |
| 6 | 3.33333333 |
| 7 | 4.375 |
| 8 | 5.71428571 |

In table 2, there are eight levels in total of the output (rated output) of the compressor B.

A compressor C is a compressor at a constant velocity, and there is a rated power consumption of 3.125 at a rated output of 5.

Operation 102: obtaining a desirable output demand threshold.

In this operation, the number of compressors in the multi-connected air conditioner system is preset according to a pre-designed highest output demand threshold, and in a real application, the output demand threshold no more than the highest output demand threshold can be selected as needed in reality.

In this operation, the desirable indoor output demand threshold is 14.49.

Operation 103: selecting compressors and operating frequencies thereof so that the sum of the rated outputs of the selected compressors is no less than the desirable output demand threshold.

In this operation, it is judged whether the rated outputs of the subsequently operating compressors satisfy the desirable output demand threshold, for example, the compressor A with an output of 7 and the compressor B with an output of 8 can be selected so that the sum of the rated outputs of the compressor A and the compressor B is 15 which is more than the output demand threshold of 14.49.

As can be seen from above, the method for optimizing the multi-connected air conditioner system in the prior art is typically concerned only with whether the rated output of the system satisfies the desirable output demand threshold without regard to an energy efficiency ratio of the system so that there may be a considerable energy consumption (power consumption) of the system satisfying the desirable output demand threshold, thus resulting in a low energy efficiency ratio; and furthermore the method also comes with non-uniform allocation of the output of each compressor in the multi-connected air conditioner system in that some compressors remain inoperative for a long period of time whereas the other compressors remain operative for a long period of time, thus degrading a service life thereof.

In WO 2008/009073 A1, it is disclosed a method for controlling a compressed air unit (1) comprising one or several compressed air networks, as well as a number of communicating controllers ( 6, 9, 13, 23, 24, 25 or 26) for controlling components that are part of the aforesaid compressed air networks, characterised in that the control of the above-mentioned components is such that none of the communicating controllers ( 6, 9, 13, 23, 24, 25 or 26) determines the operational condition of any component that is controlled by other controllers.

In US 2008/014097 A1, it is disclosed that: in order to provide a compressed air manufacturing facility which can increase a stability of a supply pressure while obtaining an energy saving effect, in a compressed air manufacturing facility provided with a compressor compressing an air, an electric motor driving the compressor, and an inverter variably controlling a rotating speed of the electric motor, the compressed air manufacturing facility is provided with a pressure sensor detecting a discharge pressure of the compressor at an upstream side position of a discharge air system connected to a discharge side of the compressor, and a control apparatus computing a pressure loss of the discharge air system in correspondence to a rotating speed of the electric motor,; and changing a control range of the discharge pressure of the compressor at the upstream side position of the discharge air system on the basis of the computation in such a manner that a terminal pressure at a downstream side position of the discharge air system comes to a predetermined range, and variably controlling the rotating speed of the electric motor via the inverter in such a manner that the discharge pressure of the compressor detected by the pressure sensor comes to the changed control range.

In US 2006/080980 A1, it is disclosed an apparatus and method for controlling compressors of a multi-chamber type air conditioner. The apparatus includes an operating time-accumulating unit for accumulating operating times of the plural compressors; a storage unit for storing the cumulative operating times obtained by the operating time-accumulating unit;

indoor control units for respectively controlling the indoor units; and an outdoor control unit for selecting compressors to be operated based on the cumulative operating times of the compressors and controlling the operations of the selected compressors, when it is necessary to operate at least one compressor based on air conditioning loads required by the indoor control units.

In WO 2005/100885 A1, a capacity control algorithm for a multiple compressor liquid chiller system 300 is provided, wherein the speed and number of compressors 302, 303 in operation are controlled in order to obtain a leaving liquid temperature setpoint. In response to an increase in the load in the chiller system 300, the algorithm determines if a compressor 302, 303 should be started and adjusts the operating speed of all operating compressors 302, 303 when an additional compressor 302, 303 is started. In response to a decrease in the load in the chiller system 300 with multiple compressors 302, 303 operating, the algorithm determines if a compressor 302, 303 should be de-energized and adjusts the operating speed of all remaining operating compressors 302, 303 when a compressor 302, 303 is de-energized.

**Summary**

An embodiment of the disclosure provides a method for optimizing compressor operation control in a multi-connected air conditioner system so as to improve the energy efficiency ratio of the multi-connected air conditioner system.
An embodiment of the disclosure further provides a device for optimizing compressor operation control in a multi-connected air conditioner system so as to improve the energy efficiency ratio of the multi-connected air conditioner system.
In order to attain the objects above of the present disclosure, a method for optimizing compressor operation control in a multi-connected air conditioner system according to an embodiment of the disclosure includes:

> obtaining rated output information and rated power consumption information of each compressor in the multi-connected air conditioner system;
> obtaining a desirable output demand threshold; and
> selecting the compressors and operating frequencies thereof so that a sum of rated outputs of the selected compressors is no less than the desirable output demand threshold and a sum of rated power consumptions of the selected compressors is minimized.

The method further includes:

> obtaining information about operating time of each compressor;
> determining a compressor satisfying a preset condition of operating time and adjusting the rated power consumption of the compressor according to a preset amount of adjustment corresponding to the condition of operating time; and
> reselecting compressors and the operating frequencies thereof according to adjustment to rated power consumption so that a sum of the rated outputs of the selected compressors is no less than the desirable output demand threshold and a sum of the rated power consumptions of the selected compressors is minimized.

The condition of operating time includes one or any combination of a condition of accumulated operating time of the compressor, a condition of continuous operating time of the compressor, and a condition of difference in operating time between a continuous operating time of the compressor and a shortest continuous operating time throughout the system.
A first operating time sub-condition threshold to a fourth operating time sub-condition threshold are preset for the condition of accumulated operating time of the compressor; and adjusting the rated power consumption of the compressor according to the preset amount of adjustment corresponding to the condition of operating time includes:

> if a difference in operating time between an accumulated operating time of the compressor and a shortest accumulated operating time throughout the system is more than the first operating time sub-condition threshold and less than the second operating time sub-condition threshold, then adjusting up the rated power consumption of the compressor in each operating situation by a preset first percent threshold;
> if the difference in operating time between the accumulated operating time of the compressor and the shortest accumulated operating time throughout the system is more than or equal to the second operating time sub-condition threshold and less than the third operating time sub-condition threshold, then adjusting up the rated power consumption of the compressor in each operating situation by a preset second percent threshold;
> if the difference in operating time between the accumulated operating time of the compressor and the shortest accumulated operating time throughout the system is more than or equal to the third operating time sub-condition threshold and less than the fourth operating time sub-condition threshold, then adjusting up the rated power consumption of the compressor in each operating situation by a preset third percent threshold;

if the difference in operating time between the accumulated operating time of the compressor and the shortest accumulated operating time throughout the system is more than or equal to the fourth operating time sub-condition threshold, then adjusting up the rated power consumption of the compressor in each operating situation by a preset fourth percent threshold.

The sum of the rated outputs of the selected compressors is made no less than the desirable output demand threshold and the sum of the rated power consumptions of the selected compressors is minimized by:

obtaining a state matrix of the multi-connected air conditioner system, an output matrix of the multi-connected air conditioner system, and a power consumption matrix of the multi-connected air conditioner system, consisted of states of the compressors, respectively;
decomposing the state matrix of the multi-connected air conditioner system into multiple state sub-matrixes of the multi-connected air conditioner system with the states of the compressors being variables, and multiplying the sub-matrixes as a result of the decomposition with the output matrix of the multi-connected air conditioner system to obtain a sum of the rated outputs of the compressors to be selected;
obtaining the state sub-matrixes of the multi-connected air conditioner system corresponding to the sum of the rated outputs of the compressors to be selected being no less than the desirable output demand threshold;
calculating a product of the obtained state sub-matrixes of the multi-connected air conditioner system and the power consumption matrix of the multi-connected air conditioner system to obtain corresponding power consumptions; and
obtaining state sub-matrix of the multi-connected air conditioner system corresponding to a lowest one of the power consumptions and selecting the compressors with the states of the compressors being 1 in the state sub-matrix of the multi-connected air conditioner system.

The rated output includes a rated refrigerating capacity and a rated heating capacity.

A rated output of an *i*-th compressor is calculated in a functional equation of:

$$b_i = \sum_{j=1}^{k} D_{ij} x_{ij} \; ;$$

and
a rated power consumption corresponding to the rated output of the *i*-th compressor is calculated in a functional equation of:

$$z_i = \sum_{j=1}^{k} C_{ij} x_{ij} \; ,$$

wherein:

$$\begin{cases} x_{ij} \in \{0,1\} \\ \sum_{j=1}^{k} x_{ij} = a_i \leq 1 \end{cases} '$$

in the equations,

$x_{ij}$ represents an *j*-th operating state of the *i*-th compressor, wherein $x_{ij} = 0$ indicates that the *i*-th compressor is disabled, or $x_{ij} = 1$ indicates that the *i*-th compressor is enabled;
$b_i$ represents the rated output of the *i*-th compressor;
$k$ represents the number of rated outputs of the *i*-th compressor in the multi-connected air conditioner system; and
$z_i$ represents the rated power consumption of the *i*-th compressor.

The sum of the rated outputs of the selected compressors is made no less than the desirable output demand threshold and the sum of the rated power consumptions of the selected compressors is minimized by solving functional equations of:

$$\begin{cases} b = \sum_{i=1}^{m} b_i = \sum_{i=1}^{m} (\sum_{j=1}^{n} D_{ij} x_{ij}) \ge b' \\ MinZ = \sum_{i=1}^{m} z_i = \sum_{i=1}^{m} (\sum_{j=1}^{n} C_{ij} x_{ij}) \end{cases},$$

in the equations,

b represents a sum of the rated outputs of the compressors to be selected;
n represents a largest one of numbers of rated outputs of the compressors in the multi-connected air conditioner system;
m represents the number of compressors in the multi-connected air conditioner system; wherein,
$C_{ij}$ and $D_{ij}$ are constants, and $x_{ij}$ is a variable; and i corresponding to the variable $x_{ij}$ of 1 is obtained as a finally selected i-th compressor, and j corresponding to the variable $x_{ij}$ of 1 is obtained as the operating state corresponding to the finally selected i-th compressor in operation.

A rated output matrix of an i-th compressor is calculated in a matrix equation of:

$$b_i' = \begin{bmatrix} x_{i1} & x_{i2} & \dots & x_{i(k-1)} & x_{ik} \end{bmatrix} x \begin{bmatrix} D_{i1} \\ D_{i2} \\ \dots \\ D_{i(k-1)} \\ D_{ik} \end{bmatrix};$$

and
a rated power consumption matrix corresponding to the rated heating capacity of the i-th compressor is calculated in a matrix equation of:

$$z_i' = \begin{bmatrix} x_{i1} & x_{i2} & \dots & x_{i(k-1)} & x_{ik} \end{bmatrix} x \begin{bmatrix} C_{i1} \\ C_{i2} \\ \dots \\ C_{i(k-1)} \\ C_{ik} \end{bmatrix}.$$

The sum of the rated outputs of the selected compressors is made no less than the desirable output demand threshold and the sum of the rated power consumptions of the selected compressors is minimized by solving matrix equations of:

$$\begin{cases} \begin{bmatrix} x_1 & x_2 & \cdots & x_{(m-1)} & x_m \end{bmatrix} x \begin{bmatrix} D_1 \\ D_2 \\ \cdot \cdot \cdot \\ D_m \end{bmatrix} \geq \begin{bmatrix} x_1 & x_2 & \cdots & x_{(m-1)} & x_m \end{bmatrix} x \begin{bmatrix} B_1 \\ B_2 \\ \cdot \cdot \cdot \\ B_m \end{bmatrix}, \\ \\ MinZ = \begin{bmatrix} x_1 & x_2 & \cdots & x_{(m-1)} & x_m \end{bmatrix} x \begin{bmatrix} C_1 \\ C_2 \\ \cdot \cdot \cdot \\ C_m \end{bmatrix} \end{cases}$$

wherein: $\begin{bmatrix} x_1 & x_2 & \cdots & x_{(m-1)} & x_m \end{bmatrix} = \begin{bmatrix} x_{11} & x_{21} & \cdots & x_{(m-1)1} & x_{m1} \\ x_{12} & x_{22} & \cdots & x_{(m-1)2} & x_{m2} \\ & & \ddots & \\ x_{1n} & x_{2n} & \cdots & x_{(m-1)n} & x_{mn} \end{bmatrix}$ represents a state matrix of the multi-connect-

ed air conditioner system; $\begin{bmatrix} D_1 \\ D_2 \\ \cdot \cdot \cdot \\ D_m \end{bmatrix} = \begin{bmatrix} D_{11} & D_{12} & \cdots & D_{1(n-1)} & D_{1n} \\ D_{21} & D_{22} & \cdots & D_{2(n-1)} & D_{2n} \\ & & \ddots & \\ D_{m1} & D_{m2} & \cdots & D_{m(n-1)} & D_{mn} \end{bmatrix}$ represents an output matrix of the multi-connected air conditioner system; and $\begin{bmatrix} C_1 \\ C_2 \\ \cdot \cdot \cdot \\ C_m \end{bmatrix} = \begin{bmatrix} C_{11} & C_{12} & \cdots & C_{1(n-1)} & C_{1n} \\ C_{21} & C_{22} & \cdots & C_{2(n-1)} & C_{2n} \\ & & \ddots & \\ C_{m1} & C_{m2} & \cdots & C_{m(n-1)} & C_{mn} \end{bmatrix}$ represents a power consumption matrix of the multi-connected air conditioner system.

A device for optimizing compressor operation control in a multi-connected air conditioner system includes a first parameter obtaining module, a second parameter obtaining module, and a selecting module, wherein:

the first parameter obtaining module is configured to obtain, and output to the selecting module, rated output information and rated power consumption information of each compressor in the multi-connected air conditioner system; the second parameter obtaining module is configured to obtain, and output to the selecting module, a desirable output demand threshold; and

the selecting module is configured to select the compressors and operating frequencies thereof so that a sum of rated outputs of the selected compressors is no less than the desirable output demand threshold and a sum of rated power consumptions of the selected compressors is minimized.

The device further includes a third parameter obtaining module and an adjusting module, wherein:

the third parameter obtaining module is configured to obtain, and output to the selecting module, information about operating time of each compressor; and

the adjusting module is configured to determine from output of the third parameter obtaining module a compressor satisfying a preset condition of operating time and to adjust the rated power consumption of the compressor, obtained by the first parameter obtaining module, according to a preset amount of adjustment corresponding to the condition of operating time and to trigger the selecting module for reselection.

The selecting module includes a parameter matrix obtaining unit, a decomposing unit, a first calculating unit, a comparing unit, a second calculating unit and a selecting unit, wherein:

the parameter matrix obtaining unit is configured to obtain a state matrix of the multi-connected air conditioner system, an output matrix of the multi-connected air conditioner system, and a power consumption matrix of the multi-connected air conditioner system, consisted of states of the compressors, respectively;

the decomposing unit is configured to decompose the state matrix of the multi-connected air conditioner system into multiple state sub-matrixes of the multi-connected air conditioner system with the states of the compressors being variables;

the first calculating unit is configured to multiply the sub-matrixes as a result of the decomposition with the output matrix of the multi-connected air conditioner system to obtain the sum of the rated outputs of the compressors to be selected;

the comparing unit is configured to obtain the state sub-matrixes of the multi-connected air conditioner system corresponding to the sum of the rated outputs of the compressors to be selected being no less than the desirable output demand threshold;

the second calculating unit is configured to calculate a product of the obtained state sub-matrixes of the multi-connected air conditioner system and the power consumption matrix of the multi-connected air conditioner system to obtain corresponding power consumptions; and

the selecting unit is configured to obtain state sub-matrix of the multi-connected air conditioner system corresponding to a lowest one of the power consumptions and to select the compressors with states of the compressors being 1 in the state sub-matrix of the multi-connected air conditioner system.

The adjusting module includes a threshold storing unit, a judging unit and an adjusting unit, wherein:

the threshold storing unit is configured to store a first operating time sub-condition threshold, a second operating time sub-condition threshold, a third operating time sub-condition threshold, and a fourth operating time sub-condition threshold, which are preset;

the judging unit is configured to output first adjustment information to the adjusting unit if a difference in operating time between an accumulated operating time of the compressor and a shortest accumulated operating time throughout the system is more than the first operating time sub-condition threshold and less than the second operating time sub-condition threshold,

to output second adjustment information to the adjusting unit if the difference in operating time between the accumulated operating time of the compressor and the shortest accumulated operating time throughout the system is more than or equal to the second operating time sub-condition threshold and less than the third operating time sub-condition threshold,

to output third adjustment information to the adjusting unit if the difference in operating time between the accumulated operating time of the compressor and the shortest accumulated operating time throughout the system is more than or equal to the third operating time sub-condition threshold and less than the fourth operating time sub-condition threshold, and

to output fourth adjustment information to the adjusting unit if the difference in operating time between the accumulated operating time of the compressor and the shortest accumulated operating time throughout the system is more than or equal to the fourth operating time sub-condition threshold; and

the adjusting unit is configured to receive the first adjustment information and to adjust up rated power consumption of the compressor in each operating situation by a preset first percent threshold; to receive the second adjustment information and to adjust up the rated power consumption of the compressor in each of the operating situations by a preset second percent threshold; to receive the third adjustment information and to adjust up the rated power consumption of the compressor in each operating situation by a preset third percent threshold; and to receive the fourth adjustment information and to adjust up the rated power consumption of the compressor in each operating situation by a preset fourth percent threshold.

As can be apparent from the technical solutions above, a method and device for optimizing compressor operation control in a multi-connected air conditioner system according to the embodiments of the present disclosure are provided, in which obtaining rated output information and rated power consumption information of each compressor in the multi-connected air conditioner system; obtaining a desirable output demand threshold; selecting the compressors and operating frequencies thereof so that a sum of the rated outputs of the selected compressors is no less than the desirable output demand threshold and a sum of the rated power consumptions of the selected compressors is minimized. Thus a set of most energy efficient operating compressors can be selected taking into account both the rated outputs and the rated power consumptions corresponding thereto of the respective compressors to thereby improve the energy efficiency ratio of the multi-connected air conditioner system.

## Brief Description of the Drawings

In order to make the technical solutions according to the embodiments of the disclosure or in the prior art more apparent, the drawings to be used in a description of the embodiments or the prior art will be described below briefly, and apparently the drawings in the description below are only illustrative some of the embodiments of the disclosure, and those ordinarily skilled in the art can further derive other embodiments and drawings from the embodiments illustrated in these drawings in which:

Fig.1 illustrates a schematic flow chart of a method for optimized compressor operation control in a multi-connected air conditioner system in the prior art.
Fig.2 illustrates a schematic flow chart of a method for optimized compressor operation control in a multi-connected air conditioner system according to an embodiment of the disclosure.
Fig.3 illustrates a schematic structural diagram of a device for optimized compressor operation control in a multi-connected air conditioner system according to an embodiment of the disclosure.

## Detailed Description of the Embodiments

The technical solutions according to the respective embodiments of the present disclosure will be described below clearly and fully with reference to the drawings, and apparently the embodiments described below are merely a part but not all of the embodiments of the disclosure. Based upon the embodiments of the present disclosure, any other embodiments which can occur to those ordinarily skilled in the art without any inventive effort shall fall into the scope of the present disclosure.

Along with growing national recognition of energy conservation and emission reduction, users also become increasingly concerned with the index of an energy efficiency ratio reflecting overall performance of a multi-connected air conditioner system, which is the ratio of an output to an input power of the multi-connected air conditioner system given a rated operating situation and a specified condition, where a higher energy efficiency ratio indicates less power consumption of the multi-connected air conditioner system. However the method for optimizing a multi-connected air conditioner system in the prior art has not involved the energy efficiency ratio of the system so that there may be a higher power consumption of the system satisfying a desirable output demand threshold. In embodiments of the present disclosure, a set of most energy efficient operating compressors can be selected optimally by taking into account both rated outputs and rated power consumptions corresponding thereto of respective compressors, in such a way that the sum of the rated outputs of the selected compressors is no less than the desirable output demand threshold and further the sum of the rated power consumptions of the selected compressors is minimized, thus improving the energy efficiency ratio of the multi-connected air conditioner system.

It shall be noted that a method for optimizing compressor operation control in a multi-connected air conditioner system according to an embodiment of the present disclosure can be applicable to both a modularly integrated air conditioner system and a multi-compressor air conditioner system.

Fig.2 illustrates a schematic flow chart of a method for optimizing compressor operation control in a multi-connected air conditioner system according to an embodiment of the present disclosure. Referring to Fig.2, the flow includes:

Operation 201: obtaining rated output information and rated power consumption information of each compressor in the multi-connected air conditioner system.
In this operation, there are multiple compressors in the multi-connected air conditioner system, and there is a different rated output of each of the compressors under a different operating situation. But in a specific operating situation, there is a specific rated output of the compressor, that is, the compressor can only operate with some rated output. The rated output includes a rated refrigerating capacity and a rated heating capacity.
In the multi-connected air conditioner system according to the embodiment of the present disclosure, if the $j$-th operating state of the $i$-th compressor is $x_{ij}$, i.e., the $j$-th operating frequency (or rotation velocity) of the compressor, then $x_{ij}$ of 1 indicates that the compressor is operative, i.e., enabled, at the frequency, and $x_{ij}$ of 0 indicates that the compressor is inoperative, i.e., disabled, at the frequency.
In a real application, a compressor is enabled or disabled for any period of time. The $j$-th operating state $x_{ij}$ of the compressor being 1 indicates that the compressor is operative to produce a corresponding rated output $D_{ij}$ along with a corresponding rated power consumption $C_{ij}$; otherwise, the operating state $x_{ij}$ of the compressor being 0 indicates that the compressor is disabled. In other words, the compressor will produce the rated output only if it is enabled.
Then the rated output of the $i$-th compressor and the rated power consumption corresponding to the rated output, i.e., the rated output information of the compressor, can be represented in the functional expressions of:

$$\begin{cases} b_i = \sum_{j=1}^{k} D_{ij} x_{ij} \\ z_i = \sum_{j=1}^{k} C_{ij} x_{ij} \end{cases},$$

Where:

$$\begin{cases} x_{ij} \in \{0,1\} \\ \sum_{j=1}^{k} x_{ij} = a_i \le 1 \end{cases}.$$

In the equations above:

$x_{ij}$ represents the $j$-th operating state of the $i$-th compressor, i.e., the $j$-th operating frequency (or rotation velocity) of the compressor, where $x_{ij} = 0$ or $x_{ij} = 1$;

$a_i$ represents the state of the $i$-th compressor and is an integer less than or equal to 1, where $a_i$ of 1 indicates that the compressor is enabled, and $a_i$ of 0 indicates that the compressor is disabled, that is, the compressor is enabled in at most one of various operating situations;

$b_i$ represents a rated output of the $i$-th compressor, where the rated output of the compressor in the $j$-th operating situation is $D_{ij}x_{ij}$;

$k$ represents the number of rated outputs of the $i$-th compressor, i.e., the number of operating situations thereof, in the multi-connected air conditioner system. For example, as described above, if the number of rated outputs of the compressor A is 7, then $k = 7$; if the number of rated outputs of the compressor B is 8, then $k = 8$; and if the number of rated outputs of the compressor C is 1, then $k = 1$; and

$z_i$ represents a rated power consumption of the $i$-th compressor, where the rated power consumption of the compressor in the $j$-th operating situation is $C_{ij}x_{ij}$.

Correspondingly the rated output of the $i$-th compressor and the rated power consumption corresponding to the rated output are expressed in the matrixes of:

$$b_i = \begin{bmatrix} x_{i1} & x_{i2} & \dots & x_{i(k-1)} & x_{ik} \end{bmatrix} x \begin{bmatrix} D_{i1} \\ D_{i2} \\ \dots \\ D_{i(k-1)} \\ D_{ik} \end{bmatrix},$$

and

$$z_i = \begin{bmatrix} x_{i1} & x_{i2} & \dots & x_{i(k-1)} & x_{ik} \end{bmatrix} x \begin{bmatrix} C_{i1} \\ C_{i2} \\ \dots \\ C_{i(k-1)} \\ C_{ik} \end{bmatrix}.$$

Operation 202: obtaining a desirable output demand threshold;

In this operation, the desirable output demand threshold is represented as $b'$, i.e., a total output to be available from the multi-connected air conditioner system in some operating situation.

Operation 203: selecting the compressors and operating frequencies thereof so that the sum of the rated outputs of the selected compressors is no less than the desirable output demand threshold and the sum of the rated power consumptions of the selected compressors is minimized.

In this operation, the compressors and operating frequencies thereof are selected so that the sum of the rated outputs of the selected compressors is no less than the desirable output demand threshold and the sum of the rated power consumptions of the selected compressors is minimized, both of which can be solved by building the following set of functions:

$$\begin{cases} b = \sum_{i=1}^{m} b_i = \sum_{i=1}^{m} (\sum_{j=1}^{n} D_{ij} x_{ij}) \geq b' \\ MinZ = \sum_{i=1}^{m} z_i = \sum_{i=1}^{m} (\sum_{j=1}^{n} C_{ij} x_{ij}) \end{cases}.$$

In the equations:

$b$ represents the sum of the rated outputs of the compressors to be selected;

$n$ represents the largest one of the numbers of rated outputs of the compressors in the multi-connected air conditioner system. For example, as described above, the number of rated outputs of the compressor A is 7, the number of rated outputs of the compressor B is 8, and the number of rated outputs of the compressor C is 1, so $n = 8$; and

$m$ represents the number of compressors in the multi-connected air conditioner system, where $m = 3$ in the embodiment of the present disclosure.

In the set of functions, $C_{ij}$ and $D_{ij}$ are constants, and $x_{ij}$ is a variable satisfying $x_{ij} \in \{0,1\}$ and $\sum_{j=1}^{n} x_{ij} \leq 1$.

Solving the set of functions above, $i$ corresponding to the variable $x_{ij}$ of 1 is obtained as the finally selected $i$-th compressor, and $j$ corresponding to the variable $x_{ij}$ of 1 is obtained as the operating state, i.e., the frequency or the rotation velocity, corresponding to the finally selected $i$-th compressor in operation; and given the operating satiation, the rated output information and the rated power consumption information corresponding to the operating situation can be obtained.

The rated output matrix of the $i$-th compressor can be calculated in the equation of:

$$b_i' = \begin{bmatrix} x_{i1} & x_{i2} & \dots & x_{i(k-1)} & x_{ik} \end{bmatrix} x \begin{bmatrix} D_{i1} \\ D_{i2} \\ \dots \\ D_{i(k-1)} \\ D_{ik} \end{bmatrix}.$$

The rated power consumption matrix corresponding to the rated heating capacity of the $i$-th compressor can be calculated in the equation of:

$$z_i' = \begin{bmatrix} x_{i1} & x_{i2} & \ldots & x_{i(k-1)} & x_{ik} \end{bmatrix} x \begin{bmatrix} C_{i1} \\ C_{i2} \\ \ldots \\ C_{i(k-1)} \\ C_{ik} \end{bmatrix}.$$

The set of functions above can be expressed in the matrixes of:

$$\begin{cases} \begin{bmatrix} x_1 & x_2 & \ldots & x_{(m-1)} & x_m \end{bmatrix} x \begin{bmatrix} D_1 \\ D_2 \\ \cdot \cdot \cdot \\ D_m \end{bmatrix} \geq \begin{bmatrix} x_1 & x_2 & \ldots & x_{(m-1)} & x_m \end{bmatrix} x \begin{bmatrix} B_1 \\ B_2 \\ \cdot \cdot \cdot \\ B_m \end{bmatrix}, \\ \\ MinZ = \begin{bmatrix} x_1 & x_2 & \ldots & x_{(m-1)} & x_m \end{bmatrix} x \begin{bmatrix} C_1 \\ C_2 \\ \cdot \cdot \cdot \\ C_m \end{bmatrix} \end{cases}$$

Where: $\begin{bmatrix} x_1 & x_2 & \ldots & x_{(m-1)} & x_m \end{bmatrix} = \begin{bmatrix} x_{11} & x_{21} & \ldots & x_{(m-1)1} & x_{m1} \\ x_{12} & x_{22} & \ldots & x_{(m-1)2} & x_{m2} \\ & & \cdot \cdot \cdot & & \\ x_{1n} & x_{2n} & \ldots & x_{(m-1)n} & x_{mn} \end{bmatrix}$ represents a state matrix of the multi-connected air conditioner system with $x_{ij}$ representing a state parameter; $\begin{bmatrix} D_1 \\ D_2 \\ \cdot \cdot \cdot \\ D_m \end{bmatrix} = \begin{bmatrix} D_{11} & D_{12} & \ldots & D_{1(n-1)} & D_{1n} \\ D_{21} & D_{22} & \ldots & D_{2(n-1)} & D_{2n} \\ & & \cdot \cdot \cdot & & \\ D_{m1} & D_{m2} & \ldots & D_{m(n-1)} & D_{mn} \end{bmatrix}$

represents an output matrix of the multi-connected air conditioner system; and

$\begin{bmatrix} C_1 \\ C_2 \\ \cdot \cdot \cdot \\ C_m \end{bmatrix} = \begin{bmatrix} C_{11} & C_{12} & \ldots & C_{1(n-1)} & C_{1n} \\ C_{21} & C_{22} & \ldots & C_{2(n-1)} & C_{2n} \\ & & \cdot \cdot \cdot & & \\ C_{m1} & C_{m2} & \ldots & C_{m(n-1)} & C_{mn} \end{bmatrix}$ represents a power consumption matrix of the multi-connected air conditioner system.

The sum of the rated outputs of the selected compressors can be made no less than the desirable output demand threshold and the sum of the rated power consumptions of the selected compressors can be minimized particularly as follows:

Operation A11: obtaining the state matrix of the multi-connected air conditioner system, the output matrix of the multi-connected air conditioner system, and the power consumption matrix of the multi-connected air conditioner system, consisted of the states of the compressors, respectively;

Operation A12: decomposing the state matrix of the multi-connected air conditioner system into multiple state sub-matrixes of the multi-connected air conditioner system with the states of the compressors being variables and multiplying the sub-matrixes as a result of the decomposition with the output matrix of the multi-connected air conditioner system to obtain the sum of the rated outputs of the compressors to be selected, and

In this operation, there is a varying state of each of the compressors in the multi-connected air conditioner system in any operating situation, thus resulting in a corresponding state sub-matrix of the multi-connected air conditioner system. Thus, if the number of rated outputs of the $i$-th compressor is $A_i$, and there are a number $L$ compressors in the multi-connected air conditioner system, then the total number $B$ of resulting state sub-matrixes of the multi-connected air conditioner system is:

$$B = \prod_{i=1}^{L} (A_i + 1);$$

Operation A13: obtaining the state sub-matrixes of the multi-connected air conditioner system corresponding to the sum of the rated outputs of the compressors to be selected being no less than the desirable output demand threshold;

Operation A14: calculating the product of the obtained state sub-matrixes of the multi-connected air conditioner system and the power consumption matrix of the multi-connected air conditioner system to obtain corresponding power consumptions; and

Operation A15: obtaining the state sub-matrix of the multi-connected air conditioner system corresponding to the lowest one of the power consumptions and selecting the compressors with the states of the compressors being 1 in the state sub-matrix of the multi-connected air conditioner system.

In summary, constraint conditions of the matrixes above are described in text as follows:

(1) Each of the compressors can only operate in some operating situation (frequency): the sum of each row of state parameter values is 1 or 0 in the state matrix of the multi-connected air conditioner system;

(2) The output of the multi-connected air conditioner system is more than or equal to the desirable output demand threshold;

(3) Each of the state parameters in the state matrix of the multi-connected air conditioner system is binary, that is, each of the compressors is enabled or disabled.

In the matrixes above, if the number of rated outputs of some compressor is less than the largest number of rated outputs, then 0's are filled at corresponding locations in the matrix. For example, the total output $b$ of the multi-connected air conditioner system including the compressor A, the compressor B and the compressor C is:

$$b = \begin{bmatrix} x_{11} & x_{12} & \dots & x_{17} & 0 \\ x_{21} & x_{22} & \dots & x_{27} & x_{28} \\ x_{31} & 0 & \dots & 0 & 0 \end{bmatrix} x \begin{bmatrix} D_{11} & D_{21} & & D_{31} \\ D_{12} & D_{22} & & 0 \\ & & \ddots & \\ 0 & D_{28} & \dots & 0 \end{bmatrix}.$$

With the total output, the total power consumption Z of the multi-connected air conditioner system is:

$$Z = \begin{bmatrix} x_{11} & x_{12} & \dots & x_{17} & 0 \\ x_{21} & x_{22} & \dots & x_{27} & x_{28} \\ x_{31} & 0 & \dots & 0 & 0 \end{bmatrix} x \begin{bmatrix} C_{11} & C_{21} & & C_{31} \\ C_{12} & C_{22} & & 0 \\ & & \ddots & \\ 0 & C_{28} & \dots & 0 \end{bmatrix}.$$

The matrixes corresponding to the sum of the rated outputs of the selected compressors being no less than the desirable output demand threshold and the sum of the rated power consumptions of the selected compressors being minimized can be expressed as:

$$\begin{cases} b = \begin{bmatrix} x_{11} & x_{12} & \dots & x_{17} & 0 \\ x_{21} & x_{22} & \dots & x_{27} & x_{28} \\ x_{31} & 0 & \dots & 0 & 0 \end{bmatrix} x \begin{bmatrix} D_{11} & D_{21} & & D_{31} \\ D_{12} & D_{22} & & 0 \\ & & \ddots & \\ 0 & D_{28} & \dots & 0 \end{bmatrix} \geq b' \\ \\ MinZ = \begin{bmatrix} x_{11} & x_{12} & \dots & x_{17} & 0 \\ x_{21} & x_{22} & \dots & x_{27} & x_{28} \\ x_{31} & 0 & \dots & 0 & 0 \end{bmatrix} x \begin{bmatrix} C_{11} & C_{21} & & C_{31} \\ C_{12} & C_{22} & & 0 \\ & & \ddots & \\ 0 & C_{28} & \dots & 0 \end{bmatrix} \end{cases}$$

A solution to the matrix can be calculated through programming in software or simulation in EXCEL.

With the optimization process above, $x_{14} = 1$, $x_{26} = 1$ and $x_{31} = 1$ can be obtained respectively, that is, the optimal set of compressors includes the compressor A at the rated output of 4 with the corresponding rated power consumption of 2.1, the compressor B at the rated output of 6 with the corresponding rated power consumption of 3.33, and the compressor C at the rated output of 5 with the corresponding rated power consumption of 3.125, thus resulting in a total rated output of 4+6+5=15, which is more than the desirable output demand threshold of 14.49, and in a total rated power consumption of 2.1+3.3+3.125=8.525. While the set of compressors in the prior art includes the compressor A at the rated output of 7 with the corresponding rated power consumption of 5, and the compressor B at the rated output of 8 with the corresponding rated power consumption of 5.7, thus resulting in a total rated power consumption of 5+5.7=10.7. Thus the method for optimizing a multi-connected air conditioner system according to the embodiment of the present disclosure can save the power consumption by 10.7-8.525=2.175 and improve the efficiency of power saving to (10.7-8.5.25)/10.7=20% as compared with the prior art given the same rated output so as to maximize the performance of the multi-connected air conditioner system and to improve effectively the energy efficiency ratio of the multi-connected air conditioner system.

In a real application, if one of the compressors operates for a too long period of time, then not only there may be non-uniform service lifes of the respective compressors in the multi-connected air conditioner systems, thus degrading the reliability throughout the multi-connected air conditioner system, but also there may be degraded performance of the compressor. In the multi-connected air conditioner system according to the embodiment of the present disclosure, operating time of the compressors can be further controlled in such a way that when one of the compressors operates for more than a preset period of time threshold or the difference thereof in operating time from one of the compressors in the system which operates for the shortest period of time exceeds a preset difference in operating time threshold, the multi-connected air conditioner system can be triggered for renewed optimization where the compressor which operates for a longer period of time is disabled and then some of the operating compressors are reselected to thereby nearly equalize the operating time of each compressor. Thus the method further includes:

Operation 204: obtaining information about operating time of each compressor; and
In this operation, the information about the operating time of the operating compressors can be collected at a preset temporal periodicity, e.g., once per day.
Operation 205: determining a compressor(s) satisfying a preset condition of operating time and adjusting the rated power consumption or consumption(s) of the compressor(s) according to a preset amount of adjustment corresponding to the condition of operating time; and
In this operation, the condition of operating time can be a condition of accumulated operating time of the compressor or can be a condition of continuous operating time of the compressor or can be a condition of difference in operating time between a continuous operating time of the compressor and the shortest continuous operating time throughout the system. Of course, there may alternatively be other conditions of operating time in a real application, e.g., a condition of difference in operating time between the continuous operating time of the compressor and the average of the continuous operating time of the compressors in the system or any combination of the conditions of operating time above.
For each of the condition of operating time, preferably there may be multiple operating time sub-condition thresholds. For example, in the event that the condition of operating time is the condition of difference in operating time between the accumulated operating time of the compressor and the shortest accumulated operating time throughout the system, four operating time sub-condition thresholds can be set respectively to be 100, 200, 300 and 400 hours, and then:
If the difference in operating time between the accumulated operating time of the compressor and the shortest accumulated operating time throughout the system is more than 100 and less than 200 hours, then the amount of adjustment corresponding to the first operating time sub-condition threshold is set to $(10\pm1)\%$ of the rated power consumption of the compressor, that is, the rated power consumption of the compressor in each of the operating situations is adjusted up by the preset first percent threshold;

If the difference in operating time between the accumulated operating time of the compressor and the shortest accumulated operating time throughout the system is more than or equal to 200 and less than 300 hours, then the amount of adjustment corresponding to the second operating time sub-condition threshold is set to $(20\pm2)\%$ of the rated power consumption of the compressor, that is, the rated power consumption of the compressor in each of the operating situations is adjusted up by the preset second percent threshold;

If the difference in operating time between the accumulated operating time of the compressor and the shortest accumulated operating time throughout the system is more than or equal to 300 and less than 400 hours, then the amount of adjustment corresponding to the third operating time sub-condition threshold is set to $(30\pm3)\%$ of the rated power consumption of the compressor, that is, the rated power consumption of the compressor in each of the operating situations is adjusted up by the preset third percent threshold; and

If the difference in operating time between the accumulated operating time of the compressor and the shortest accumulated operating time throughout the system is more than or equal to 400 hours, then the amount of adjustment corresponding to the fourth operating time sub-condition threshold is set to $(50\pm5)\%$ of the rated power consumption of the compressor, that is, the rated power consumption of the compressor in each of the operating situations is adjusted up by the preset fourth percent threshold.

Operation 206: reselecting the compressors according to the adjustment to the rated power consumption(s) so that the sum of the rated outputs of the selected compressors is no less than the desirable output demand threshold and the sum of the rated power consumptions of the selected compressors is minimized.

This operation is performed the same as the operation 203, where $z_i{}'$ represents the rated power consumption of the $i$-th compressor in the state $a_i$ after the rated power consumption is adjusted, and $(C_{ij} + \Delta C_{ij})x_{ij}$ represents the rated power consumption of the compressor in the $j$-th operating situation with $\Delta C_{ij}$ representing a parameter of the amount of adjustment to the rated power consumption. For example, for the compressor above satisfying the first operating time sub-condition threshold, $\Delta C_{ij} = 0.1C_{ij}$.

Thus the matrix can be solved by rebuilding the following set of functions:

$$\begin{cases} \sum_{i=1}^{m} b_i = \sum_{i=1}^{m} (\sum_{j=1}^{n} D_{ij} x_{ij}) \geq b \\ MinZ = \sum_{i=1}^{m} z_i' = \sum_{i=1}^{m} (\sum_{j=1}^{n} ((C_{ij} + \Delta C_{ij})x_{ij}) \end{cases}.$$

The set of functions can be solved so that there is a lower probability that a compressor with a longer operating time ( e.g., the accumulated operating time or the continuous operating time) is reselected, thus equalizing operation of the respective compressors so as to avoid some compressors from being enabled for a long period of time and the other compressors from being disabled for a long period of time to thereby equalize the lives of the respective compressors; and in the meantime, the multi-connected air conditioner system can become more energy-conserving, the operating parameters of the multi-connected air conditioner system can be optimized, and the capacities of refrigerating and heating of the multi-connected air conditioner system can be utilized fully; and moreover rather than simply uniform allocation of the compressors from the output demand threshold, the present method taking into full account the power consumption of the multi-connected air conditioner system can minimize the power consumption of the multi-connected air conditioner system on the premise of satisfying the output demand threshold to thereby lower effectively a waste of energy.

The corresponding matrixes can be expressed as:

$$b = \begin{bmatrix} x_{11} & x_{12} & \cdots & x_{1(n-1)} & x_{1n} \\ x_{21} & x_{22} & \cdots & x_{2(n-1)} & x_{2n} \\ & & \ddots & & \\ x_{m1} & x_{m2} & \cdots & x_{m(n-1)} & x_{mn} \end{bmatrix} x \begin{bmatrix} D_{11} & D_{21} & \cdots & D_{(m-1)1} & D_{m1} \\ D_{12} & D_{22} & \cdots & D_{(m-1)2} & D_{m2} \\ & & \ddots & & \\ D_{1n} & D_{2n} & \cdots & D_{(m-1)n} & D_{mn} \end{bmatrix} \geq b'$$

$$MinZ = \begin{bmatrix} x_{11} & x_{12} & \cdots & x_{1(n-1)} & x_{1n} \\ x_{21} & x_{22} & \cdots & x_{2(n-1)} & x_{2n} \\ & & \ddots & & \\ x_{m1} & x_{m2} & \cdots & x_{m(n-1)} & x_{mn} \end{bmatrix} x \begin{bmatrix} (C_{11}+\Delta C_{11}) & (C_{21}+\Delta C_{21}) & \cdots & (C_{(m-1)1}+\Delta C_{(m-1)1}) & (C_{m1}+\Delta C_{m1}) \\ (C_{12}+\Delta C_{12}) & (C_{21}+\Delta C_{22}) & \cdots & (C_{(m-1)2}+\Delta C_{(m-1)2}) & (C_{m1}+\Delta C_{m2}) \\ & & \ddots & & \\ (C_{1n}+\Delta C_{1n}) & (C_{2n}+\Delta C_{2n}) & \cdots & (C_{(m-1)n}+\Delta C_{(m-1)n}) & (C_{mn}+\Delta C_{mn}) \end{bmatrix}$$

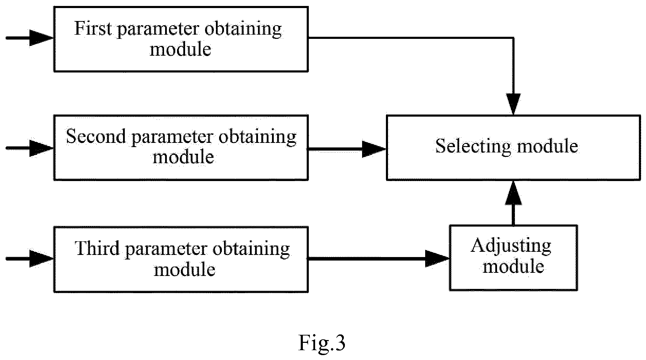

Fig.3 illustrates a schematic structural diagram of a device for optimizing compressor operation control in a multi-connected air conditioner system according to an embodiment of the present disclosure. Referring to Fig.3, the device includes a first parameter obtaining module, a second parameter obtaining module, and a selecting module, where:

The first parameter obtaining module is configured to obtain, and output to the selecting module, rated output information and rated power consumption information of each compressor in the multi-connected air conditioner system.

In the embodiment of the present disclosure, the rated output includes a rated refrigerating capacity and a rated heating capacity.

The second parameter obtaining module is configured to obtain, and output to the selecting module, a desirable output demand threshold; and

The selecting module is configured to select the compressors and operating frequencies thereof so that the sum of rated outputs of the selected compressors is no less than the desirable output demand threshold and the sum of rated power consumptions of the selected compressors is minimized.

Preferably the device further includes a third parameter obtaining module and an adjusting module, where:

The third parameter obtaining module is configured to obtain, and output to the selecting module, information about operating time of each compressor; and

The adjusting module is configured to determine from the output of the third parameter obtaining module a compressor(s) satisfying a preset condition of operating time and to adjust the rated power consumption or consumption(s) of the compressor(s), obtained by the first parameter obtaining module, according to a preset amount of adjustment corresponding to the condition of operating time and to trigger the selecting module for reselection.

Where:

The selecting module includes a parameter matrix obtaining unit, a decomposing unit, a first calculating unit, a comparing unit, a second calculating unit and a selecting unit (not illustrated), where:

The parameter matrix obtaining unit is configured to obtain a state matrix of the multi-connected air conditioner system, an output matrix of the multi-connected air conditioner system, and a power consumption matrix of the multi-connected air conditioner system, consisted of the states of the compressors, respectively;

The decomposing unit is configured to decompose the state matrix of the multi-connected air conditioner system into multiple state sub-matrixes of the multi-connected air conditioner system with the states of the compressors being variables;

In the embodiment of the present disclosure, there is a varying state of each of the compressors in the multi-connected air conditioner system in any operating situation, thus resulting in a corresponding state sub-matrix of the multi-connected air conditioner system. Thus, if the number of rated outputs of the i-th compressor is $A_i$, and there are a number $L$ compressors in the multi-connected air conditioner system, then the total number B of resulting state sub-matrixes of the multi-connected air conditioner system is:

$$B = \prod_{i=1}^{L} (A_i + 1);$$

The first calculating unit is configured to multiply the sub-matrixes as a result of the decomposition with the output matrix of the multi-connected air conditioner system to obtain the sum of the rated outputs of the compressors to be selected;

The comparing unit is configured to obtain the state sub-matrixes of the multi-connected air conditioner system corresponding to the sum of the rated outputs of the compressors to be selected being no less than the desirable output demand threshold;

The second calculating unit is configured to calculate the product of the obtained state sub-matrixes of the multi-connected air conditioner system and the power consumption matrix of the multi-connected air conditioner system to obtain corresponding power consumptions; and

The selecting unit is configured to obtain the state sub-matrix of the multi-connected air conditioner system corresponding to the lowest one of the power consumptions and to select the compressors with the states of the compressors being 1 in the state sub-matrix of the multi-connected air conditioner system.

Preferably the adjusting module includes a threshold storing unit, a judging unit and an adjusting unit (not illustrated), where:

The threshold storing unit is configured to store a first operating time sub-condition threshold, a second operating time sub-condition threshold, a third operating time sub-condition threshold, and a fourth operating time sub-condition threshold, which are preset;

The judging unit is configured to output first adjustment information to the adjusting unit if the difference in operating time between an accumulated operating time of the compressor and the shortest accumulated operating time throughout the system is more than the first operating time sub-condition threshold and less than the second operating time sub-condition threshold,

To output second adjustment information to the adjusting unit if the difference in operating time between the accumulated operating time of the compressor and the shortest accumulated operating time throughout the system is more than or equal to the second operating time sub-condition threshold and less than the third operating time sub-condition threshold,

To output third adjustment information to the adjusting unit if the difference in operating time between the accumulated operating time of the compressor and the shortest accumulated operating time throughout the system is more than or equal to the third operating time sub-condition threshold and less than the fourth operating time sub-condition threshold, and

To output fourth adjustment information to the adjusting unit if the difference in operating time between the accumulated operating time of the compressor and the shortest accumulated operating time throughout the system is more than or equal to the fourth operating time sub-condition threshold; and

The adjusting unit is configured to receive the first adjustment information and to adjust up the rated power consumption of the compressor in each of the operating situations by a preset first percent threshold; to receive the second adjustment information and to adjust up the rated power consumption of the compressor in each of the operating situations by a preset second percent threshold; to receive the third adjustment information and to adjust up the rated power consumption of the compressor in each of the operating situations by a preset third percent threshold; and to receive the fourth adjustment information and to adjust up the rated power consumption of the compressor in each of the operating situations by a preset fourth percent threshold.

Evidently those skilled in the art can make various modifications and variations to the present disclosure without departing from the scope of the present disclosure. Thus the present disclosure is also intended to encompass these modifications and variations thereto so long as the modifications and variations come into the scope of the claims appended to the present disclosure.

## Claims

1. A method for optimizing compressor operation control in a multi-connected air conditioner system, wherein the method comprises:

    obtaining (201) rated output information and rated power consumption information of each compressor in the multi-connected air conditioner system;

obtaining (202) a desirable output demand threshold; and

selecting (203) compressors and operating frequencies thereof so that a sum of rated outputs of the selected compressors is no less than the desirable output demand threshold and a sum of rated power consumptions of the selected compressors is minimized;

**characterized in that**:

wherein the sum of the rated outputs of the selected compressors is made no less than the desirable output demand threshold and the sum of the rated power consumptions of the selected compressors is minimized by:

obtaining a state matrix of the multi-connected air conditioner system, an output matrix of the multi-connected air conditioner system, and a power consumption matrix of the multi-connected air conditioner system, consisted of states of the compressors, respectively;

decomposing the state matrix of the multi-connected air conditioner system into multiple state sub-matrixes of the multi-connected air conditioner system with the states of the compressors being variables, and multiplying the sub-matrixes as a result of the decomposition with the output matrix of the multi-connected air conditioner system to obtain a sum of the rated outputs of compressors to be selected;

obtaining state sub-matrixes of the multi-connected air conditioner system corresponding to the sum of the rated outputs of the compressors to be selected being no less than the desirable output demand threshold;

calculating a product of the obtained state sub-matrixes of the multi-connected air conditioner system and the power consumption matrix of the multi-connected air conditioner system to obtain corresponding power consumptions; and

obtaining state sub-matrix of the multi-connected air conditioner system corresponding to a lowest one of the power consumptions and selecting compressors with states of the compressors being 1 in the state sub-matrix of the multi-connected air conditioner system.

2. The method according to claim 1, wherein the method further comprises:

obtaining (204) information about operating time of each compressor;

determining (205) a compressor satisfying a preset condition of operating time and adjusting rated power consumption of the compressor according to a preset amount of adjustment corresponding to the condition of operating time; and

reselecting (206) compressors and operating frequencies thereof according to adjustment to rated power consumption so that a sum of the rated outputs of the selected compressors is no less than the desirable output demand threshold and a sum of the rated power consumptions of the selected compressors is minimized.

3. The method according to claim 2, wherein the condition of operating time comprises one or any combination of a condition of accumulated operating time of the compressor, a condition of continuous operating time of the compressor, and a condition of difference in operating time between a continuous operating time of the compressor and a shortest continuous operating time throughout the system.

4. The method according to claim 3, wherein a first operating time sub-condition threshold to a fourth operating time sub-condition threshold are preset for the condition of accumulated operating time of the compressor; and adjusting the rated power consumption of the compressor according to the preset amount of adjustment corresponding to the condition of operating time comprises:

if a difference in operating time between an accumulated operating time of the compressor and a shortest accumulated operating time throughout the system is more than the first operating time sub-condition threshold and less than the second operating time sub-condition threshold, then adjusting up the rated power consumption of the compressor in each operating situation by a preset first percent threshold;

if the difference in operating time between the accumulated operating time of the compressor and the shortest accumulated operating time throughout the system is more than or equal to the second operating time sub-condition threshold and less than the third operating time sub-condition threshold, then adjusting up the rated power consumption of the compressor in each operating situation by a preset second percent threshold;

if the difference in operating time between the accumulated operating time of the compressor and the shortest accumulated operating time throughout the system is more than or equal to the third operating time sub-condition threshold and less than the fourth operating time sub-condition threshold, then adjusting up the rated power consumption of the compressor in each operating situation by a preset third percent threshold;

if the difference in operating time between the accumulated operating time of the compressor and the shortest accumulated operating time throughout the system is more than or equal to the fourth operating time sub-condition threshold, then adjusting up the rated power consumption of the compressor in each operating situation by a preset fourth percent threshold;

5. The method according to claim 1, wherein the rated output comprises a rated refrigerating capacity and a rated heating capacity.

6. The method according to any one of claims 1 to 4, wherein:

a rated output of an $i$-th compressor is calculated in a functional equation of:

$$b_i = \sum_{j=1}^{k} D_{ij} x_{ij} \; ;$$

and
a rated power consumption corresponding to the rated output of the $i$-th compressor is calculated in a functional equation of:

$$z_i = \sum_{j=1}^{k} C_{ij} x_{ij} \; ,$$

wherein:

$$\begin{cases} x_{ij} \in \{0,1\} \\ \sum_{j=1}^{k} x_{ij} = a_i \leq 1 \end{cases} ,$$

in the equations,

$x_{ij}$ represents an $j$-th operating state of the $i$-th compressor, wherein $x_{ij} = 0$ indicates that the $i$-th compressor is disabled, or $x_{ij} = 1$ indicates that the $i$-th compressor is enabled;
$b_i$ represents the rated output of the $i$-th compressor;
$k$ represents the number of rated outputs of the $i$-th compressor in the multi-connected air conditioner system; and
$z_i$ represents the rated power consumption of the $i$-th compressor.

7. The method according to claim 6, wherein the sum of the rated outputs of the selected compressors is made no less than the desirable output demand threshold and the sum of the rated power consumptions of the selected compressors is minimized by solving functional equations of:

$$\begin{cases} b = \sum_{i=1}^{m} b_i = \sum_{i=1}^{m} ( \sum_{j=1}^{n} D_{ij} x_{ij} ) \geq b' \\ MinZ = \sum_{i=1}^{m} z_i = \sum_{i=1}^{m} ( \sum_{j=1}^{n} C_{ij} x_{ij} ) \end{cases} ,$$

in the equations,

*b* represents a sum of the rated outputs of the compressors to be selected;

*n* represents a largest one of numbers of rated outputs of each compressor in the multi-connected air conditioner system;

*m* represents the number of compressors in the multi-connected air conditioner system; wherein,

$C_{ij}$ and $D_{ij}$ are constants, and $x_{ij}$ is a variable; and *i* corresponding to variable $x_{ij}$ of 1 is obtained as a finally selected *i*-th compressor, and *j* corresponding to variable $x_{ij}$ of 1 is obtained as operating state corresponding to the finally selected *i*-th compressor in operation.

8. The method according to any one of claims 1 to 4, wherein a rated output matrix of an *i*-th compressor is calculated in a matrix equation of:

$$b_i' = \begin{bmatrix} x_{i1} & x_{i2} & \cdots & x_{i(k-1)} & x_{ik} \end{bmatrix} x \begin{bmatrix} D_{i1} \\ D_{i2} \\ \cdots \\ D_{i(k-1)} \\ D_{ik} \end{bmatrix} ;$$

a rated power consumption matrix corresponding to the rated heating capacity of the *i*-th compressor is calculated in a matrix equation of:

$$z_i' = \begin{bmatrix} x_{i1} & x_{i2} & \cdots & x_{i(k-1)} & x_{ik} \end{bmatrix} x \begin{bmatrix} C_{i1} \\ C_{i2} \\ \cdots \\ C_{i(k-1)} \\ C_{ik} \end{bmatrix} .$$

9. The method according to claim 8, wherein the sum of the rated outputs of the selected compressors is made no less than the desirable output demand threshold and the sum of the rated power consumptions of the selected compressors is minimized by solving matrix equations of:

$$\begin{cases} \begin{bmatrix} x_1 & x_2 & \cdots & x_{(m-1)} & x_m \end{bmatrix} x \begin{bmatrix} D_1 \\ D_2 \\ \cdot \cdot \\ D_m \end{bmatrix} \geq \begin{bmatrix} x_1 & x_2 & \cdots & x_{(m-1)} & x_m \end{bmatrix} x \begin{bmatrix} B_1 \\ B_2 \\ \cdot \cdot \\ B_m \end{bmatrix} , \\ MinZ = \begin{bmatrix} x_1 & x_2 & \cdots & x_{(m-1)} & x_m \end{bmatrix} x \begin{bmatrix} C_1 \\ C_2 \\ \cdot \cdot \\ C_m \end{bmatrix} \end{cases}$$

wherein: $\begin{bmatrix} x_1 & x_2 & \cdots & x_{(m-1)} & x_m \end{bmatrix} = \begin{bmatrix} x_{11} & x_{21} & \cdots & x_{(m-1)1} & x_{m1} \\ x_{12} & x_{22} & \cdots & x_{(m-1)2} & x_{m2} \\ & & \cdot \cdot & & \\ x_{1n} & x_{2n} & \cdots & x_{(m-1)n} & x_{mn} \end{bmatrix}$ represents a state matrix of the multi-con-

nected air conditioner system;
$$\begin{bmatrix} D_1 \\ D_2 \\ \vdots \\ D_m \end{bmatrix} = \begin{bmatrix} D_{11} & D_{12} & \cdots & D_{1(n-1)} & D_{1n} \\ D_{21} & D_{22} & \cdots & D_{2(n-1)} & D_{2n} \\ & & \ddots & & \\ D_{m1} & D_{m2} & \cdots & D_{m(n-1)} & D_{mn} \end{bmatrix}$$
represents an output matrix of the multi-connected air conditioner system; and
$$\begin{bmatrix} C_1 \\ C_2 \\ \vdots \\ C_m \end{bmatrix} = \begin{bmatrix} C_{11} & C_{12} & \cdots & C_{1(n-1)} & C_{1n} \\ C_{21} & C_{22} & \cdots & C_{2(n-1)} & C_{2n} \\ & & \ddots & & \\ C_{m1} & C_{m2} & \cdots & C_{m(n-1)} & C_{mn} \end{bmatrix}$$
represents a power consumption matrix of the multi-connected air conditioner system.

10. A device for optimizing compressor operation control in a multi-connected air conditioner system, the device comprising a first parameter obtaining module, a second parameter obtaining module, and a selecting module, wherein:

the first parameter obtaining module is configured to obtain, and output to the selecting module, rated output information and rated power consumption information of each compressor in the multi-connected air conditioner system;
the second parameter obtaining module is configured to obtain, and output to the selecting module, a desirable output demand threshold; and
the selecting module is configured to select compressors and operating frequencies thereof so that a sum of rated outputs of the selected compressors is no less than the desirable output demand threshold and a sum of rated power consumptions of the selected compressors is minimized;
**characterized in that**:

wherein the selecting module comprises a parameter matrix obtaining unit, a decomposing unit, a first calculating unit, a comparing unit, a second calculating unit and a selecting unit, wherein:

the parameter matrix obtaining unit is configured to obtain a state matrix of the multi-connected air conditioner system, an output matrix of the multi-connected air conditioner system, and a power consumption matrix of the multi-connected air conditioner system, consisted of states of the compressors, respectively;
the decomposing unit is configured to decompose the state matrix of the multi-connected air conditioner system into multiple state sub-matrixes of the multi-connected air conditioner system with the states of the compressors being variables;
the first calculating unit is configured to multiply the sub-matrixes as a result of the decomposition with the output matrix of the multi-connected air conditioner system to obtain a sum of rated outputs of compressors to be selected;
the comparing unit is configured to obtain state sub-matrixes of the multi-connected air conditioner system corresponding to the sum of the rated outputs of the compressors to be selected being no less than the desirable output demand threshold;
the second calculating unit is configured to calculate a product of the obtained state sub-matrixes of the multi-connected air conditioner system and the power consumption matrix of the multi-connected air conditioner system to obtain corresponding power consumptions; and
the selecting unit is configured to obtain state sub-matrix of the multi-connected air conditioner system corresponding to a lowest one of the power consumptions and to select the compressors with states of the compressors being 1 in the state sub-matrix of the multi-connected air conditioner system.

11. The device according to claim 10, further comprising a third parameter obtaining module and an adjusting module, wherein:

the third parameter obtaining module is configured to obtain, and output to the selecting module, information about operating time of each compressor; and
the adjusting module is configured to determine from output of the third parameter obtaining module a compressor satisfying a preset condition of operating time and to adjust the rated power consumption of the compressor, obtained by the first parameter obtaining module, according to a preset amount of adjustment corresponding to the condition of operating time and to trigger the selecting module for reselection.

**12.** The device according to claim 10 or 11, wherein the adjusting module comprises a threshold storing unit, a judging unit and an adjusting unit, wherein:

the threshold storing unit is configured to store a first operating time sub-condition threshold, a second operating time sub-condition threshold, a third operating time sub-condition threshold, and a fourth operating time sub-condition threshold, which are preset;

the judging unit is configured to output first adjustment information to the adjusting unit if a difference in operating time between an accumulated operating time of the compressor and a shortest accumulated operating time throughout the system is more than the first operating time sub-condition threshold and less than the second operating time sub-condition threshold,

to output second adjustment information to the adjusting unit if the difference in operating time between the accumulated operating time of the compressor and the shortest accumulated operating time throughout the system is more than or equal to the second operating time sub-condition threshold and less than the third operating time sub-condition threshold,

to output third adjustment information to the adjusting unit if the difference in operating time between the accumulated operating time of the compressor and the shortest accumulated operating time throughout the system is more than or equal to the third operating time sub-condition threshold and less than the fourth operating time sub-condition threshold, and

to output fourth adjustment information to the adjusting unit if the difference in operating time between the accumulated operating time of the compressor and the shortest accumulated operating time throughout the system is more than or equal to the fourth operating time sub-condition threshold; and

the adjusting unit is configured to receive the first adjustment information and to adjust up rated power consumption of the compressor in each operating situation by a preset first percent threshold; to receive the second adjustment information and to adjust up the rated power consumption of the compressor in each of the operating situations by a preset second percent threshold; to receive the third adjustment information and to adjust up the rated power consumption of the compressor in each operating situation by a preset third percent threshold; and to receive the fourth adjustment information and to adjust up the rated power consumption of the compressor in each operating situation by a preset fourth percent threshold.

**Patentansprüche**

**1.** Ein Verfahren zur Optimierung von Kompressorbetriebssteuerung in einem mehrfach-verbundenen Klimatisierungssystem, wobei das Verfahren umfasst:

Erfassen (201) von Nennausgangsleistungsinformationen und Nennleistungsaufnahmeinformationen von jedem Kompressor in dem mehrfach-verbundenen Klimatisierungssystem;
Erfassen (202) eines erwünschten Ausgangsbedarfsschwellenwertes; und
Auswahl (203) von Kompressoren und deren Betriebsfrequenzen, sodass eine Summe von Nennausgangsleistungen von den ausgewählten Kompressoren nicht geringer ist als der erwünschte Ausgangsbedarfsschwellenwert und eine Summe von Nennleistungsaufnahmen von den ausgewählten Kompressoren minimiert wird;
**dadurch gekennzeichnet, dass**:

wobei die Summe der Nennausgangsleistungen von den ausgewählten Kompressoren nicht geringer als der erwünschte Ausgangsbedarfsschwellenwert gesetzt wird und die Summe der Nennleistungsaufnahmen der ausgewählten Kompressoren minimiert wird durch:

Erfassen einer Zustandsmatrix von dem mehrfach-verbundenen Klimatisierungssystem, einer Ausgangsmatrix von dem mehrfach-verbundenen Klimatisierungssystem, und einer Leistungsaufnahmematrix von dem mehrfach-verbundenen Klimatisierungssystem, die jeweils aus den Zuständen von den Kompressoren bestand;
Zerlegen der Zustandsmatrix von dem mehrfach-verbundenen Klimatisierungssystem in mehrere Zustands-Teil-Matrizen von dem mehrfach-verbundenen Klimatisierungssystem, wobei die Zustände von dem Kompressor Variablen sind, und Multiplizieren der Teil-Matrizen als ein Ergebnis der Zerlegung mit der Ausgangsmatrix von dem mehrfach-verbundenen Klimatisierungssystem, um eine Summe von den Nennausgangsleistungen der auszuwählenden Kompressoren zu erfassen;

Erfassen von Zustands-Teil-Matrizen von dem mehrfach-verbundenen Klimatisierungssystem entsprechend der Summe der Nennausgangsleistungen der auszuwählenden Kompressoren, die nicht geringer als der erwünschte Ausgangsbedarfsschwellenwert ist;

Berechnen eines Produktes der erfassten Zustands-Teil-Matrizen von dem mehrfach-verbundenen Klimatisierungssystem und der Leistungsaufnahmematrix von dem mehrfach-verbundenen Klimatisierungssystem, um entsprechende Leistungsaufnahmen zu erfassen; und

Erfassen einer Zustands-Teil-Matrix von dem mehrfach-verbundenen Klimatisierungssysteme entsprechend einer niedrigsten der Leistungsaufnahmen und Auswählen von Kompressoren mit Zuständen von den Kompressoren gleich 1 in der Zustands-Teil-Matrix von dem mehrfach-verbundenen Klimatisierungssystem.

2. Das Verfahren nach Anspruch 1, wobei das Verfahren weiterhin umfasst:

Erfassen (204) von Informationen über Betriebszeiten von jedem Kompressor;

Bestimmen (205) eines eine voreingestellte Bedingung an Betriebszeit erfüllenden Kompressors und Anpassen von Nennleistungsaufnahme von dem Kompressor entsprechend einer voreingestellten Summe an Anpassung entsprechend der Bedingung an Betriebszeit; und

Wiederauswählen (206) von Kompressoren und deren Betriebsfrequenzen entsprechend der Anpassung an Nennleistungsaufnahme, sodass eine Summe von den Nennausgangsleistungen von den ausgewählten Kompressoren nicht geringer ist als der erwünschte Ausgangsbedarfsschwellenwert und eine Summe von den Nennleistungsaufnahmen von den ausgewählten Kompressoren minimiert wird.

3. Das Verfahren nach Anspruch 2, wobei die Bedingung der Betriebszeit einen oder eine beliebige Kombination von einer Bedingung an akkumulierter Betriebszeit von dem Kompressor, eine Bedingung an kontinuierlicher Betriebszeit von dem Kompressor, und eine Bedingung an Unterschied in Betriebszeit zwischen einer kontinuierlichen Betriebszeit von dem Kompressor und einer kürzesten kontinuierlichen Betriebszeit im gesamten System umfasst.

4. Das Verfahren nach Anspruch 4, wobei ein erster Betriebszeit-Unterbedingungsschwellenwert bis ein vierter Betriebszeit-Unterbedingungsschwellenwert voreingestellt sind für die Bedingung an akkumulierter Betriebszeit von dem Kompressor; und Anpassen der Nennleistungsaufnahme von dem Kompressor entsprechend der voreingestellten Summe an Anpassung entsprechend der Bedingung an Betriebszeit umfasst:

wenn ein Unterschied in Betriebszeit zwischen einer akkumulierten Betriebszeit von dem Kompressor und einer kürzesten akkumulierten Distanz im gesamten System größer ist als der erste Betriebszeit-Unterbedingungsschwellenwert und geringer als der zweite Betriebszeit-Unterbedingungsschwellenwert, dann Hochregeln der Nennleistungsaufnahme von dem Kompressor in jeder Betriebssituation um einen voreingestellten ersten Prozentschwellenwert;

wenn der Unterschied in Betriebszeit zwischen der akkumulierten Betriebszeit von dem Kompressor und der kürzesten akkumulierten Betriebszeit im gesamten System größer als oder gleich dem zweiten Betriebszeit-Unterbedingungsschwellenwert und geringer als der dritte Betriebszeit-Unterbedingungsschwellenwert ist, dann Hochregeln der Nennleistungsaufnahme von dem Kompressor in jeder Betriebssituation um einen voreingestellten zweiten Prozentschwellenwert;

wenn der Unterschied in Betriebszeit zwischen der akkumulierten Betriebszeit von dem Kompressor und der kürzesten akkumulierten Betriebszeit im gesamten System größer oder gleich dem dritten Betriebszeit-Unterbedingungsschwellenwert und geringer als der vierte Betriebszeit-Unterbedingungsschwellenwert ist, dann Hochregeln der Nennleistungsaufnahme von dem Kompressor in jeder Betriebssituation um einen voreingestellten dritten Prozentschwellenwert;

wenn der Unterschied in Betriebszeit zwischen der akkumulierten Betriebszeit von dem Kompressor und der kürzesten akkumulierten Betriebszeit im gesamten System größer oder gleich dem vierten Betriebszeit-Unterbedingungsschwellenwert ist, dann Hochregeln der Nennleistungsaufnahme von dem Kompressor in jeder Betriebssituation um einen voreingestellten vierten Prozentschwellenwert.

5. Das Verfahren nach Anspruch 1, wobei die Nennausgangsleistung eine Nennkälteleistung und eine Nennheizleistung umfasst.

6. Das Verfahren nach einem der Ansprüche 1 bis 4, wobei:

eine Nennausgangsleistung von einem $i$-ten Kompressor in einer funktionalen Gleichung berechnet wird von:

$$b_i = \sum_{j=1}^{k} D_{ij} x_{ij} \; ;$$

und

eine Nennleistungsaufnahme entsprechend der Nennausgangsleistung von dem $i$-ten Kompressor in einer funktionalen Gleichung berechnet wird von:

$$z_i = \sum_{j=1}^{k} C_{ij} x_{ij} \; ,$$

wobei:

$$\begin{cases} x_{ij} \in \{0,1\} \\ \sum_{j=1}^{k} x_{ij} = a_i \le 1 \end{cases} ,$$

in den Gleichungen

repräsentiert $x_{ij}$ einen $j$-ten Betriebszustand von dem $i$-ten Kompressor, wobei $x_{ij} = 0$ bezeichnet, dass der $i$-te Kompressor ausgeschaltet ist, oder $x_{ij} = 1$ bezeichnet, dass der $i$-te Kompressor eingeschaltet ist;
$b_i$ repräsentiert die Nennausgangsleistung von dem $i$-ten Kompressor;
$k$ repräsentiert die Anzahl der Nennausgangsleistungen von dem $i$-ten Kompressor in dem mehrfach-verbundenen Klimatisierungssystem; und
$z_i$ repräsentiert die Nennleistungsaufnahme von dem $i$-ten Kompressor.

7. Das Verfahren nach Anspruch 6, wobei die Summe von den Nennausgangsleistungen von den ausgewählten Kompressoren nicht geringer gesetzt wird als der erwünschte Ausgangsbedarfsschwellenwert und die Summe von den Nennleistungsaufnahmen von den ausgewählten Kompressoren minimiert wird durch Lösen funktioneller Gleichungen von:

$$\begin{cases} b = \sum_{i=1}^{m} b_i = \sum_{i=1}^{m} (\sum_{j=1}^{n} D_{ij} x_{ij}) \ge b' \\ MinZ = \sum_{i=1}^{m} z_i = \sum_{i=1}^{m} (\sum_{j=1}^{n} C_{ij} x_{ij}) \end{cases} ,$$

in den Gleichungen

repräsentiert $b$ eine Summe von den Nennausgangsleistungen von den auszuwählenden Kompressoren;
$n$ repräsentiert eine größte Anzahl von Nennausgangsleistungen von jedem Kompressor in dem mehrfach-verbundenen Klimatisierungssystem;
$m$ repräsentiert die Anzahl von Kompressoren in dem mehrfach-verbundenen Klimatisierungssystem;

wobei

$C_{ij}$ und $D_{ij}$ Konstanten sind, und $x_{ij}$ eine Variable ist; und $i$ entsprechend Variable $x_{ij}$ gleich 1 erfasst wird als ein schlussendlich ausgewählter $i$-ter Kompressor, und $j$ entsprechend Variable $x_{ij}$ gleich 1 erfasst wird als ein Betriebszustand entsprechend dem schlussendlich ausgewählten $i$-ten Kompressor im Betrieb.

8. Das Verfahren nach einem der Ansprüche 1 bis 4, wobei eine Nennausgangsleistungsmatrix von einem $i$-ten Kompressor errechnet wird in einer Matrixgleichung von:

$$b_i' = \begin{bmatrix} x_{i1} & x_{i2} & \ldots & x_{i(k-1)} & x_{ik} \end{bmatrix} x \begin{bmatrix} D_{i1} \\ D_{i2} \\ \ldots \\ D_{i(k-1)} \\ D_{ik} \end{bmatrix} ;$$

eine Nennleistungsaufnahmematrix entsprechend der Nennheizleistung von dem *i*-ten Kompressor errechnet wird in einer Matrixgleichung von:

$$z_i' = \begin{bmatrix} x_{i1} & x_{i2} & \ldots & x_{i(k-1)} & x_{ik} \end{bmatrix} x \begin{bmatrix} C_{i1} \\ C_{i2} \\ \ldots \\ C_{i(k-1)} \\ C_{ik} \end{bmatrix} .$$

9. Das Verfahren nach Anspruch 8, wobei die Summe von den Nennausgangsleistungen von den ausgewählten Kompressoren nicht geringer gemacht wird als der erwünschte Ausgangsbedarfsschwellenwert und die Summe von den Nennleistungsaufnahmen von den ausgewählten Kompressoren minimiert wird durch Lösen der Matrixgleichungen von:

$$\begin{cases} \begin{bmatrix} x_1 & x_2 & \ldots & x_{(m-1)} & x_m \end{bmatrix} x \begin{bmatrix} D_1 \\ D_2 \\ \cdot \cdot \\ D_m \end{bmatrix} \geq \begin{bmatrix} x_1 & x_2 & \ldots & x_{(m-1)} & x_m \end{bmatrix} x \begin{bmatrix} B_1 \\ B_2 \\ \cdot \cdot \\ B_m \end{bmatrix} , \\ MinZ = \begin{bmatrix} x_1 & x_2 & \ldots & x_{(m-1)} & x_m \end{bmatrix} x \begin{bmatrix} C_1 \\ C_2 \\ \cdot \cdot \\ C_m \end{bmatrix} \end{cases}$$

wobei: $\begin{bmatrix} x_1 & x_2 & \ldots & x_{(m-1)} & x_m \end{bmatrix} = \begin{bmatrix} x_{11} & x_{21} & \ldots & x_{(m-1)1} & x_{m1} \\ x_{12} & x_{22} & \ldots & x_{(m-1)2} & x_{m2} \\ & & \cdot \cdot & & \\ x_{1n} & x_{2n} & \ldots & x_{(m-1)n} & x_{mn} \end{bmatrix}$ eine Zustandsmatrix von dem mehrfach-

verbundenen Klimatisierungssystem repräsentiert; $\begin{bmatrix} D_1 \\ D_2 \\ \cdot \cdot \\ D_m \end{bmatrix} = \begin{bmatrix} D_{11} & D_{12} & \ldots & D_{1(n-1)} & D_{1n} \\ D_{21} & D_{22} & \ldots & D_{2(n-1)} & D_{2n} \\ & & \cdot \cdot & & \\ D_{m1} & D_{m2} & \ldots & D_{m(n-1)} & D_{mn} \end{bmatrix}$ eine Aus-

gangsmatrix von dem mehrfach-verbundenen Klimatisierungssystem repräsentiert; und

$$\begin{bmatrix} C_1 \\ C_2 \\ \vdots \\ C_m \end{bmatrix} = \begin{bmatrix} C_{11} & C_{12} & \cdots & C_{1(n-1)} & C_{1n} \\ C_{21} & C_{22} & \cdots & C_{2(n-1)} & C_{2n} \\ & & \ddots & & \\ C_{m1} & C_{m2} & \cdots & C_{m(n-1)} & C_{mn} \end{bmatrix}$$ eine Leistungsaufnahmematrix von dem mehrfach-verbundenen Klimatisierungssystem repräsentiert.

10. Eine Vorrichtung zum Optimieren der Kompressorbetriebssteuerung in einem mehrfach-verbundenen Klimatisierungssystem, wobei die Vorrichtung ein erstes Parameter-Erfassungs-Modul, ein zweites Parameter-Erfassungs-Modul und ein Auswahlmodul umfasst, wobei:

das erste Parameter-Erfassungs-Modul konfiguriert ist, Nennausgangsleistungsinformationen und Nennleistungsaufnahmeinformationen von jedem Kompressor in dem mehrfach-verbundenen Klimatisierungssystem zu erfassen und an das Auswahlmodul auszugeben;
das zweite Parameter-Erfassungs-Modul konfiguriert ist, einen erwünschten Ausgangsbedarfsschwellenwert zu erfassen und an das Auswahlmodul auszugeben; und
das Auswahlmodul konfiguriert ist, Kompressoren und deren Betriebsfrequenzen auszuwählen, sodass eine Summe von Nennausgangsleistungen von den ausgewählten Kompressoren nicht geringer ist als der erwünschte Ausgangsbedarfsschwellenwert und eine Summe von Nennleistungsaufnahmen von den ausgewählten Kompressoren minimiert wird;
**dadurch gekennzeichnet, dass**:

wobei das Auswahlmodul eine Parameter-Matrix-Erfassungs-Einheit, eine Zerlegungseinheit, eine erste Berechnungseinheit, eine Vergleichseinheit, eine zweite Berechnungseinheit und eine Auswahleinheit umfasst, wobei:

die Parameter-Matrix-Erfassungs-Einheit konfiguriert ist, eine Zustandsmatrix von dem mehrfach-verbundenen Klimatisierungssystem, eine Ausgangsmatrix von dem mehrfach-verbundenen Klimatisierungssystem, und eine Leistungsaufnahmematrix von dem mehrfach-verbundenen Klimatisierungssystem zu erfassen, die jeweils aus Zuständen von den Kompressoren bestand;
die Zerlegungseinheit konfiguriert ist, die Zustandsmatrix von dem mehrfach-verbundenen Klimatisierungssystem in mehrere Zustands-Teil-Matrizen von dem mehrfach-verbundenen Klimatisierungssystem zu zerlegen, wobei die Zustände von den Kompressoren Variablen sind;
die erste Berechnungseinheit konfiguriert ist, die Teil-Matrizen als ein Ergebnis von der Zerlegung mit der Ausgangsmatrix von dem mehrfach-verbundenen Klimatisierungssystem zu multiplizieren, um eine Summe von Nennausgangsleistungen von auszuwählenden Kompressoren zu erfassen;
die Vergleichseinheit konfiguriert ist, Zustands-Teil-Matrizen von dem mehrfach-verbundenen Klimatisierungssystem zu erfassen entsprechend der Summe von den Nennausgangsleistungen von den auszuwählenden Kompressoren, die nicht geringer ist als der erwünschte Ausgangsbedarfsschwellenwert;
die zweite Berechnungseinheit konfiguriert ist, ein Produkt von den erfassten Zustands-Teil-Matrizen von dem mehrfach-verbundenen Klimatisierungssystem und der Leistungsaufnahmematrix von dem mehrfach-verbundenen Klimatisierungssystem zu berechnen, um dazugehörige Leistungsaufnahmen zu erfassen; und
die Auswahleinheit konfiguriert ist, eine Zustands-Teil-Matrix von dem mehrfach-verbundenen Klimatisierungssystem entsprechend einer niedrigsten der Leistungsaufnahmen zu erfassen und die Kompressoren mit Zuständen von den Kompressoren gleich 1 in der Zustands-Teil-Matrix von dem mehrfach-verbundenen Klimatisierungssystem auszuwählen.

11. Die Vorrichtung nach Anspruch 10, weiterhin umfassend ein drittes Parameter-Erfassungs-Modul und ein Anpassungsmodul, wobei:

das dritte Parameter-Erfassungs-Modul konfiguriert ist, Informationen über Betriebszeiten von jedem Kompressor zu erfassen und an das Auswahlmodul auszugeben; und
Das Anpassungsmodul konfiguriert ist, aus der Ausgabe von dem dritten Parameter-Erfassungs-Modul einen eine voreingestellte Bedingung an Betriebszeit erfüllenden Kompressor zu bestimmen und die Nennleistungsaufnahme von dem Kompressor, die erfasst ist von dem ersten Parameter-Erfassungs-Modul, anzupassen entsprechend einer voreingestellten Summe von Anpassung entsprechend der Bedingung an Betriebszeit und das Auswahlmodul zur Wiederauswahl zu veranlassen.

**12.** Die Vorrichtung nach Anspruch 10 oder 11, wobei das Anpassungsmodul eine Schwellenwert-Speicher-Einheit, eine Beurteilungseinheit und eine Anpassungseinheit umfasst, wobei:

die Schwellenwert-Speicher-Einheit konfiguriert ist, einen ersten Betriebszeit-Unterbedingungsschwellenwert, einen zweiten Betriebszeit-Unterbedingungsschwellenwert, einen dritten Betriebszeit-Unterbedingungsschwellenwert, und einen vierten Betriebszeit-Unterbedingungsschwellenwert zu speichern, welche voreingestellt sind; die Beurteilungseinheit konfiguriert ist, erste Anpassungsinformationen an die Anpassungseinheit auszugeben, wenn ein Unterscheid in Betriebszeit zwischen einer akkumulierten Betriebszeit von dem Kompressor und einer kürzesten akkumulierten Betriebszeit im gesamten System mehr ist als der erste Betriebszeit-Unterbedingungsschwellenwert und geringer als der zweite Betriebszeit-Unterbedingungsschwellenwert, zweite Anpassungsinformationen auszugeben an die Anpassungseinheit, wenn der Unterschied in Betriebszeit zwischen der akkumulierten Betriebszeit von dem Kompressor und der kürzesten akkumulierten Betriebszeit im gesamten System mehr oder gleich dem zweiten Betriebszeit-Unterbedingungsschwellenwert und geringer als der dritte Betriebszeit-Unterbedingungsschwellenwert ist, dritte Anpassungsinformationen auszugeben an die Anpassungseinheit, wenn der Unterschied in Betriebszweit zwischen der akkumulierten Betriebszeit von dem Kompressor und der kürzesten akkumulierten Betriebszeit im gesamten System mehr oder gleich dem dritten Betriebszeit-Unterbedingungsschwellenwert und geringer als der vierte Betriebszeit-Unterbedingungsschwellenwert ist, und vierte Anpassungsinformationen auszugeben an die Anpassungseinheit, wenn der Unterschied in Betriebszeit zwischen der akkumulierten Betriebszeit von dem Kompressor und der kürzesten akkumulierten Betriebszeit im gesamten System mehr oder gleich dem vierten Betriebszeit-Unterbedingungsschwellenwert ist; und die Anpassungseinheit konfiguriert ist, die erste Anpassungsinformation zu empfangen und die Nennleistungsaufnahme von dem Kompressor in jeder Betriebssituation um einen voreingestellten ersten Prozentschwellenwert anzupassen; die zweite Anpassungsinformation zu empfangen und die Nennleistungsaufnahme von dem Kompressor in jeder von den Betriebssituationen um einen voreingestellten zweiten Prozentschwellenwert anzupassen; die dritte Anpassungsinformation zu empfangen und die Nennleistungsaufnahme von dem Kompressor in jeder Betriebssituation um einen voreingestellten dritten Prozentschwellenwert anzupassen; und die vierte Anpassungsinformation zu empfangen und die Nennleistungsaufnahme von dem Kompressor in jeder Betriebssituation um einen voreingestellten vierten Prozentschwellenwert anzupassen.

**Revendications**

**1.** Procédé destiné à optimiser une commande de fonctionnement d'un compresseur dans un système de climatisation à connexions multiples, dans lequel le procédé comprend les étapes consistant à :

obtenir (201) des informations de sortie nominale et des informations de consommation d'énergie nominale de chaque compresseur du système de climatisation à connexions multiples ; obtenir (202) un seuil de demande de sortie souhaitable ; et sélectionner (203) des compresseurs et leurs fréquences de fonctionnement de telle sorte que la somme des sorties nominales des compresseurs sélectionnés ne soit pas inférieure au seuil de demande de sortie souhaitable, et que la somme des consommations d'énergie nominales des compresseurs sélectionnés soit réduite au minimum ; **caractérisé en ce que** :

la somme des sorties nominales des compresseurs sélectionnés n'est pas inférieure au seuil de demande de sortie souhaitable, et la somme des consommations d'énergie nominales des compresseurs sélectionnés est réduite au minimum, grâce aux étapes consistant à :

obtenir une matrice d'état du système de climatisation à connexions multiples, une matrice de sortie du système de climatisation à connexions multiples, et une matrice de consommation d'énergie du système de climatisation à connexions multiples, constituées respectivement des états des compresseurs ; décomposer la matrice d'état du système de climatisation à connexions multiples en de multiples matrices d'état secondaires du système de climatisation à connexions multiples, les états des compresseurs étant des variables, et multiplier les matrices secondaires résultant de la décomposition, par la matrice de sortie du système de climatisation à connexions multiples de façon à obtenir la somme des sorties nominales des compresseurs à sélectionner ;

obtenir des matrices d'état secondaires du système de climatisation à connexions multiples, correspondant à la somme des sorties nominales des compresseurs à sélectionner, qui n'est pas inférieure au seuil de demande de sortie souhaitable ;

calculer le produit des matrices d'état secondaires obtenues du système de climatisation à connexions multiples, par la matrice de consommation d'énergie du système de climatisation à connexions multiples, de façon à obtenir les consommations d'énergie correspondantes ; et

obtenir une matrice d'état secondaire du système de climatisation à connexions multiples, correspondant à la plus faible des consommations d'énergie, et sélectionner les compresseurs dont les états des compresseurs sont égaux à 1 dans la matrice d'état secondaire du système de climatisation à connexions multiples.

**2.** Procédé selon la revendication 1, dans lequel le procédé comprend en outre les étapes consistant à :

obtenir des informations (204) relatives à la durée de fonctionnement de chaque compresseur ;
déterminer (205) un compresseur qui remplit une condition préréglée de la durée de fonctionnement et régler la consommation d'énergie nominale du compresseur selon une quantité préréglée de réglages correspondant à la condition de durée de fonctionnement ; et
sélectionner de nouveau (206) des compresseurs et leurs fréquences de fonctionnement selon un réglage de la consommation d'énergie nominale, de telle sorte que la somme des sorties nominales des compresseurs sélectionnés, ne soit pas inférieure au seuil de demande de sortie souhaitable, et que la somme des consommations d'énergie nominales des compresseurs sélectionnés soit réduite au minimum.

**3.** Procédé selon la revendication 2, dans lequel la condition de durée de fonctionnement comprend une condition, ou n'importe quelle combinaison des conditions suivantes : une condition de durée de fonctionnement accumulé du compresseur, une condition de durée de fonctionnement continu du compresseur, et une condition de différence de durée de fonctionnement entre une durée de fonctionnement continu du compresseur, et la plus courte durée de fonctionnement continu dans tout le système.

**4.** Procédé selon la revendication 3, dans lequel quatre seuils de condition secondaire de durée de fonctionnement sont préréglés pour la condition de durée de fonctionnement accumulé du compresseur ;
et l'étape consistant à régler la consommation d'énergie nominale du compresseur selon la quantité préréglée de réglage correspondant à la condition de durée de fonctionnement, comprend les étapes suivantes :

si la différence de durée de fonctionnement entre une durée de fonctionnement accumulé du compresseur et la plus courte durée de fonctionnement accumulé dans tout le système est supérieure au premier seuil de condition secondaire de durée de fonctionnement, et inférieure au deuxième seuil de condition secondaire de durée de fonctionnement, augmenter alors la consommation d'énergie nominale du compresseur dans chaque situation de fonctionnement d'un premier pourcentage de seuil préréglé ;
si la différence de durée de fonctionnement entre la durée de fonctionnement accumulé du compresseur et la plus courte durée de fonctionnement accumulé dans tout le système est supérieure ou égale au deuxième seuil de condition secondaire de durée de fonctionnement, et inférieure au troisième seuil de condition secondaire de durée de fonctionnement, augmenter alors la consommation d'énergie nominale du compresseur dans chaque situation de fonctionnement d'un deuxième pourcentage de seuil préréglé ;
si la différence de durée de fonctionnement entre la durée de fonctionnement accumulé du compresseur et la plus courte durée de fonctionnement accumulé dans tout le système est supérieure ou égale au troisième seuil de condition secondaire de durée de fonctionnement, et inférieure au quatrième seuil de condition secondaire de durée de fonctionnement, augmenter alors la consommation d'énergie nominale du compresseur dans chaque situation de fonctionnement d'un troisième pourcentage de seuil préréglé ;
si la différence de durée de fonctionnement entre la durée de fonctionnement accumulé du compresseur et la plus courte durée de fonctionnement accumulé dans tout le système est supérieure ou égale au quatrième seuil de condition secondaire de durée de fonctionnement, augmenter alors la consommation d'énergie nominale du compresseur dans chaque situation de fonctionnement d'un quatrième pourcentage de seuil préréglé.

**5.** Procédé selon la revendication 1, dans lequel la sortie nominale comprend une capacité de refroidissement nominale et une capacité de chauffage nominale.

6. Procédé selon l'une quelconque des revendications 1 à 4, dans lequel :

la sortie nominale d'un i<sup>ème</sup> compresseur est calculée dans l'équation fonctionnelle suivante :

$$b_i = \sum_{j=1}^{k} D_{ij} x_{ij} \; ;$$

et
la consommation d'énergie nominale correspondant à la sortie nominale du i<sup>ème</sup> compresseur est calculée dans l'équation fonctionnelle suivante :

$$z_i = \sum_{j=1}^{k} C_{ij} x_{ij}$$

dans laquelle :

$$\begin{cases} x_{ij} \in \{0,1\} \\ \sum_{j=1}^{k} x_{ij} = a_i \end{cases}.$$

dans les équations :

$x_{ij}$ représente le $j^{ème}$ état de fonctionnement du $i^{ème}$ compresseur, dans laquelle $x_{ij} = 0$ indique que le $i^{ème}$ compresseur est désactivé, ou $x_{ij} = 1$ indique que le $i^{ème}$ compresseur est activé ;
$b_i$ représente la sortie nominale du $i^{ème}$ compresseur ;
$k$ représente le nombre de sorties nominales du $i^{ème}$ compresseur du système de climatisation à connexions multiples ; et
$z_i$ représente la consommation d'énergie nominale du $i^{ème}$ compresseur.

7. Procédé selon la revendication 6, dans lequel la somme des sorties nominales des compresseurs sélectionnés n'est pas inférieure au seuil de demande de sortie souhaitable, et la somme des consommations d'énergie nominales des compresseurs sélectionnés, est réduite au minimum, en résolvant les équations fonctionnelles suivantes :

$$\begin{cases} b = \sum_{i=1}^{m} b_i = \sum_{i=1}^{m} (\sum_{j=1}^{n} D_{ij} x_{ij}) \geq b' \\ MinZ = \sum_{i=1}^{m} z_i = \sum_{i=1}^{m} (\sum_{j=1}^{n} C_{ij} x_{ij}) \end{cases}$$

dans les équations :

$b$ représente la somme des sorties nominales des compresseurs à sélectionner ;
$n$ représente le plus grand nombre de sorties nominales de chaque compresseur du système de climatisation à connexions multiples ;
$m$ représente le nombre de compresseurs du système de climatisation à connexions multiples ;

dans lesquelles :

$C_{ij}$ et $D_{ij}$ sont des constantes, et $x_{ij}$ est une variable ; et $i$ correspondant à la variable $x_{ij}$ égale à 1, est obtenu en tant que $i^{ème}$ compresseur finalement sélectionné, et $j$ correspondant à la variable $x_{ij}$ égale à 1, est obtenu en tant qu'état de fonctionnement correspondant au $i^{ème}$ compresseur en fonctionnement finalement sélectionné.

**8.** Procédé selon l'une quelconque des revendications 1 à 4, dans lequel une matrice de sortie nominale d'un $i^{ème}$ compresseur est calculée dans l'équation matricielle suivante :

$$b_i' = \begin{bmatrix} x_{i1} & x_{i2} & \ldots & x_{i(k-1)} & x_{ik} \end{bmatrix} x \begin{bmatrix} D_{i1} \\ D_{i2} \\ \ldots \\ D_{i(k-1)} \\ D_{ik} \end{bmatrix}$$

la matrice de consommation d'énergie nominale correspondant à la capacité de chauffage nominale du $i^{ème}$ compresseur est calculée dans l'équation matricielle suivante :

$$z_i' = \begin{bmatrix} x_{i1} & x_{i2} & \ldots & x_{i(k-1)} & x_{ik} \end{bmatrix} x \begin{bmatrix} C_{i1} \\ C_{i2} \\ \ldots \\ C_{i(k-1)} \\ C_{ik} \end{bmatrix}$$

**9.** Procédé selon la revendication 8, dans lequel la somme des sorties nominales des compresseurs sélectionnés n'est pas inférieure au seuil de demande de sortie souhaitable, et la somme des consommations d'énergie nominales des compresseurs sélectionnés est réduite au minimum, en résolvant les équations matricielles suivantes :

$$\begin{cases} \begin{bmatrix} x_1 & x_2 & \ldots & x_{(m-1)} & x_m \end{bmatrix} x \begin{bmatrix} D_1 \\ D_2 \\ \ddots \\ D_m \end{bmatrix} \geq \begin{bmatrix} x_1 & x_2 & \ldots & x_{(m-1)} & x_m \end{bmatrix} x \begin{bmatrix} B_1 \\ B_2 \\ \ddots \\ B_m \end{bmatrix} \\ \\ MinZ = \begin{bmatrix} x_1 & x_2 & \ldots & x_{(m-1)} & x_m \end{bmatrix} x \begin{bmatrix} C_1 \\ C_2 \\ \ddots \\ C_m \end{bmatrix} \end{cases}$$

dans laquelle :

$$\begin{bmatrix} x_1 & x_2 & \ldots & x_{(m-1)} & x_m \end{bmatrix} = \begin{bmatrix} x_{11} & x_{21} & \ldots & x_{(m-1)1} & x_{m1} \\ x_{12} & x_{22} & \ldots & x_{(m-1)2} & x_{m2} \\ & & \ddots & & \\ x_{1n} & x_{2n} & \ldots & x_{(m-1)n} & x_{mn} \end{bmatrix}$$

représente une matrice d'état du système de climatisation à connexions multiples ;

$$\begin{bmatrix} D_1 \\ D_2 \\ \cdot \cdot \\ D_m \end{bmatrix} = \begin{bmatrix} D_{11} & D_{12} & \ldots & D_{1(n-1)} & D_{1n} \\ D_{21} & D_{22} & \ldots & D_{2(n-1)} & D_{2n} \\ & & & \cdot \cdot \\ D_{m1} & D_{m2} & \ldots & D_{m(n-1)} & D_{mn} \end{bmatrix}$$

représente une matrice de sortie du système de climatisation à connexions multiples ; et

$$\begin{bmatrix} C_1 \\ C_2 \\ \cdot \cdot \\ C_m \end{bmatrix} = \begin{bmatrix} C_{11} & C_{12} & \ldots & C_{1(n-1)} & C_{1n} \\ C_{21} & C_{22} & \ldots & C_{2(n-1)} & C_{2n} \\ & & & \cdot \cdot \\ C_{m1} & C_{m2} & \ldots & C_{m(n-1)} & C_{mn} \end{bmatrix}$$

représente une matrice de consommation d'énergie du système de climatisation à connexions multiples ;

**10.** Dispositif destiné à optimiser une commande de fonctionnement d'un compresseur d'un système de climatisation à connexions multiples, le dispositif comprenant un premier module d'obtention de paramètres, un deuxième module d'obtention de paramètres, et un module de sélection, dans lequel :

le premier module d'obtention de paramètres est configuré de façon à obtenir, et à délivrer en sortie au module de sélection, des informations de sortie nominale et des informations de consommation d'énergie nominale de chaque compresseur du système de climatisation à connexions multiples ;
le deuxième module d'obtention de paramètres est configuré de façon à obtenir, et à délivrer en sortie au module de sélection, un seuil de demande de sortie souhaitable ; et
le module de sélection est configuré de façon à sélectionner des compresseurs et leurs fréquences de fonctionnement de telle sorte que la somme des sorties nominales des compresseurs sélectionnés ne soit pas inférieure au seuil de demande de sortie souhaitable, et que la somme des consommations d'énergie nominales des compresseurs sélectionnés, soit réduite au minimum ;
**caractérisé en ce que** :

le module de sélection comprend une unité d'obtention de matrice de paramètres, une unité de décomposition, une première unité de calcul, une unité de comparaison, une seconde unité de calcul et une unité de sélection ;
dans lequel :

l'unité d'obtention de la matrice de paramètres est configurée de façon à obtenir une matrice d'état du système de climatisation à connexions multiples, une matrice de sortie du système de climatisation à connexions multiples, et une matrice de consommation d'énergie du système de climatisation à connexions multiples, constituées respectivement des états des compresseurs ;
l'unité de décomposition est configurée de façon à décomposer la matrice d'état du système de climatisation à connexions multiples, en de multiples matrices d'état secondaires du système de climatisation à connexions multiples, les états des compresseurs étant des variables ;
la première unité de calcul est configurée de façon à multiplier les matrices secondaires qui résultent de la décomposition, par la matrice de sortie du système de climatisation à connexions multiples, de façon à obtenir la somme des sorties nominales des compresseurs à sélectionner ;
l'unité de comparaison est configurée de façon à obtenir des matrices d'état secondaires du système de climatisation à connexions multiples, correspondant à la somme des sorties nominales des compresseurs à sélectionner, qui n'est pas inférieure au seuil de demande de sortie souhaitable ;
la seconde unité de calcul est configurée de façon à calculer le produit des matrices d'état secondaires obtenues du système de climatisation à connexions multiples, par la matrice de consommation d'énergie du système de climatisation à connexions multiples, de façon à obtenir les consommations d'énergie correspondantes ; et
l'unité de sélection est configurée de façon à obtenir une matrice d'état secondaire du système de climatisation à connexions multiples, qui correspond à la plus faible des consommations d'énergie, et à sélectionner les compresseurs dont les états des compresseurs sont égaux à 1 dans la matrice d'état secondaire du système de climatisation à connexions multiples.

**11.** Dispositif selon la revendication 10, comprenant en outre un troisième module d'obtention de paramètres et un module de réglages, dans lequel :

le troisième module d'obtention de paramètres est configuré de façon à obtenir, et à délivrer en sortie au module de sélection, des informations relatives à la durée de fonctionnement de chaque compresseur ; et
le module de réglages est configuré de façon à déterminer à partir de la sortie du troisième module d'obtention de paramètres, un compresseur qui remplit une condition préréglée de durée de fonctionnement, et à régler la consommation d'énergie nominale du compresseur, obtenue par le premier module d'obtention de paramètres, selon une quantité préréglée de réglages correspondant à la condition de durée de fonctionnement, et à déclencher le module de sélection afin de procéder à une nouvelle sélection.

**12.** Dispositif selon la revendication 10 ou la revendication 11, dans lequel le module de réglages comprend une unité de stockage de seuil, une unité de jugement et une unité de réglage, dans lequel :

l'unité de stockage de seuil est configurée de façon à stocker une première condition secondaire de seuil de fonctionnement, une deuxième condition secondaire de seuil de fonctionnement, une troisième condition secondaire de seuil de fonctionnement, et une quatrième condition secondaire de seuil de fonctionnement, qui sont préréglées ;
l'unité de jugement est configurée de façon à :

délivrer en sortie des premières informations de réglage à l'unité de réglage, si la différence de durée de fonctionnement entre une durée de fonctionnement accumulé du compresseur et la plus courte durée de fonctionnement accumulé dans tout le système, est supérieure au premier seuil de condition secondaire de durée de fonctionnement, et inférieure au deuxième seuil de condition secondaire de durée de fonctionnement ;
délivrer en sortie des deuxièmes informations de réglage à l'unité de réglage, si la différence de durée de fonctionnement entre une durée de fonctionnement accumulé du compresseur et la plus courte durée de fonctionnement accumulé dans tout le système, est supérieure ou égale au deuxième seuil de condition secondaire de durée de fonctionnement, et inférieure au troisième seuil de condition secondaire de durée de fonctionnement ;
délivrer en sortie des troisièmes informations de réglage à l'unité de réglage, si la différence de durée de fonctionnement entre une durée de fonctionnement accumulé du compresseur et la plus courte durée de fonctionnement accumulé dans tout le système, est supérieure ou égale au troisième seuil de condition secondaire de durée de fonctionnement, et inférieure au quatrième seuil de condition secondaire de durée de fonctionnement ; et
délivrer en sortie des quatrièmes informations de réglage à l'unité de réglage, si la différence de durée de fonctionnement entre une durée de fonctionnement accumulé du compresseur et la plus courte durée de fonctionnement accumulé dans tout le système, est supérieure ou égale au quatrième seuil de condition secondaire de durée de fonctionnement ; et
l'unité de réglage est configurée de façon à :

recevoir les premières informations de réglage, et à augmenter la consommation d'énergie nominale du compresseur dans chaque situation de fonctionnement d'un premier pourcentage de seuil préréglé ;
recevoir les deuxièmes informations de réglage, et à augmenter la consommation d'énergie nominale du compresseur dans chacune des situations de fonctionnement d'un deuxième pourcentage de seuil préréglé ;
recevoir les troisièmes informations de réglage, et à augmenter la consommation d'énergie nominale du compresseur dans chaque situation de fonctionnement d'un troisième pourcentage de seuil préréglé ; et
recevoir les quatrièmes informations de réglage, et à augmenter la consommation d'énergie nominale du compresseur dans chaque situation de fonctionnement d'un quatrième pourcentage de seuil préréglé.

Obtaining rated output of each compressor in the multi-connected air conditioner system | 101

Obtaining a desirable output demand threshold | 102

Selecting compressors and operating frequencies thereof so that the sum of the rated outputs of the selected compressors is no less than the desirable output demand threshold | 103

Fig.1

Obtaining rated output information and rated power consumption information of each compressor in the multi-connected air conditioner system | 201

Obtaining a desirable output demand threshold | 202

Selecting the compressors and operating frequencies thereof so that the sum of the rated outputs of the selected compressors is no less than the desirable output demand threshold and the sum of the rated power consumptions of the selected compressors is minimized | 203

Obtaining information about operating time of each compressor | 204

Determining a compressor(s) satisfying a preset condition of operating time and adjusting the rated power consumption(s) of the compressor(s) according to a preset amount of adjustment corresponding to the condition of operating time | 205

Reselecting the compressors according to the adjustment to the rated power consumption(s) so that the sum of the rated outputs of the selected compressors is no less than the desirable output demand threshold and the sum of the rated power consumptions of the selected compressors is minimized | 206

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008009073 A1
- US 2008014097 A1
- US 2006080980 A1
- WO 2005100885 A1